(19) Europäisches Patentamt
European Patent Office
Office européen des brevets

(11) EP 1 403 957 A1

(12) # EUROPEAN PATENT APPLICATION
published in accordance with Art. 158(3) EPC

(43) Date of publication:
**31.03.2004 Bulletin 2004/14**

(21) Application number: **02720527.7**

(22) Date of filing: **19.04.2002**

(51) Int Cl.[7]: **H01M 10/40**, H01G 9/038, H01G 9/04

(86) International application number:
**PCT/JP2002/003937**

(87) International publication number:
**WO 2002/093679 (21.11.2002 Gazette 2002/47)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **10.05.2001 JP 2001140490**

(71) Applicant: **Nisshinbo Industries, Inc.**
**Chuo-ku, Tokyo 103-8650 (JP)**

(72) Inventors:
- **SATO, T., c/o Nisshinbo Industries, Inc., R & D Chiba-shi, Chiba 267-0056 (JP)**
- **IIDA, H., c/o Nisshinbo Industries, Inc. R & D Chiba-shi, Chiba 267-0056 (JP)**
- **MARUO, T., c/o Nisshinbo Industries, Inc. R & D Chiba-shi, Chiba 267-0056 (JP)**
- **BANNO, K., c/o Nisshinbo Industries, Inc., R & D Chiba-shi, Chiba 267-0056 (JP)**

(74) Representative: **Stuart, Ian Alexander et al**
**MEWBURN ELLIS**
**York House**
**23 Kingsway**
**London WC2B 6HP (GB)**

(54) **NONAQUEOUS ELECTROLYTIC SOLUTION, COMPOSITION FOR POLYMER GEL ELECTROLYTE, POLYMER GEL ELECTROLYTE, SECONDARY CELL, AND ELECTRIC DOUBLE-LAYER CAPACITOR**

(57) The addition of a compound which reductively decomposes on a potential at least 1.0 V higher than the equilibrium potential of metallic lithium and lithium ions (a potential versus $Li/Li^+$ of +1.0 V or more) to an electrolyte solution for a secondary cell keeps propylene carbonate, when used as an organic electrolyte therein, from decomposing on the negative electrode. Such addition also improves the cycle properties, electrical capacity and low-temperature characteristics of the cell.

**FIG.1**

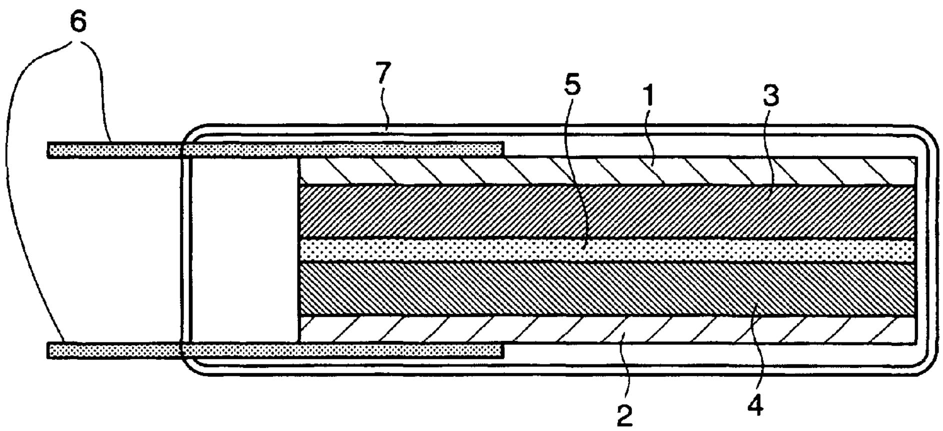


EP 1 403 957 A1

**Description**

TECHNICAL FIELD

The present invention relates to nonaqueous electrolyte solutions, polymer gel electrolyte-forming compositions and polymer gel electrolytes, as well as to secondary cells and electrical double-layer capacitors.

BACKGROUND ART

Nonaqueous electrolyte-based secondary cells such as lithium secondary cells have attracted much attention in recent years on account of their high voltage and high energy density. Nonaqueous solvents used in organic electrolytes for such secondary cells are mixtures composed of a cyclic carbonate or lactone having a high dielectric constant and a high viscosity, such as propylene carbonate (PC), ethylene carbonate (EC) or γ-butyrolactone (GBL), in combination with a low-viscosity acyclic carbonate, such as dimethyl carbonate (DMC) or diethyl carbonate (DEC), or a low-viscosity ether such as 1,2-dimethoxyethane (DME), diglyme or dioxolane.

The negative electrode used in the above nonaqueous electrolyte-based secondary cells is generally composed of a carbonaceous material such as coke or graphite.

However, when a negative electrode made of such a carbonaceous material is used, with charge/discharge cycling, the nonaqueous solvent is electrochemically reduced at the interface between the carbonaceous material and the electrolyte and decomposes on the negative electrode, gradually lowering the capacity of the secondary cell.

Particularly in lithium secondary cells in which a lithium-containing double oxide is used as the positive electrode and a highly crystallized carbonaceous material such as natural graphite or artificial graphite is used as the negative electrode, decomposition of the nonaqueous solvent during charging causes the carbonaceous material to delaminate, dramatically lowering the electrical capacity and cycle properties.

For example, propylene carbonate (PC) is well-suited for use as a nonaqueous solvent because it has a low melting point and a high dielectric constant. However, when highly crystallized graphite is employed as the negative electrode material, propylene carbonate undergoes considerable decomposition with repeated charging and discharging, and is thus difficult to use as an electrolyte for secondary cells.

Hence, ethylene carbonate (EC) is used instead of propylene carbonate. Yet, because ethylene carbonate has a high melting point of 37 to 39°C, this has given rise to a new problem--a decline in the low-temperature properties of the secondary cell.

Various methods for improving the low-temperature properties of batteries have thus been proposed. For example, JP-A 6-52887 describes the use of a nonaqueous solvent that is a mixed solvent composed of vinylene carbonate (VC), which does not decompose on a graphite negative electrode and has a solidifying point of 22°C--lower than that of ethylene carbonate, in combination with a low-boiling solvent having a boiling point of less than 150°C.

JP-A 7-220758 notes that when vinylene carbonate and propylene carbonate are mixed, the solidifying point of vinylene carbonate decreases, and discloses a liquid electrolyte composed of an equal-volume mixture of vinylene carbonate and propylene carbonate.

JP-A 8-96852 discloses a method in which vinylene carbonate is employed as the high dielectric constant solvent instead of propylene carbonate, and is used in admixture with an acyclic ester.

However, because these prior-art methods use as the nonaqueous solvent a large amount of vinylene carbonate, which has a relatively high solidifying point, the electrolyte tends to have a high melting point. As a result, batteries with fully satisfactory low-temperature properties have been impossible to achieve in this way. Moreover, the high cost of vinylene carbonate compared with other nonaqueous solvents drives up the cost of the secondary cell.

DISCLOSURE OF THE INVENTION

The present invention was conceived of in light of the above circumstances. One object of this invention is to provide nonaqueous electrolyte solutions which keep propylene carbonate, when used as the organic electrolyte, from decomposing on the negative electrode, and which can improve the cycle properties, electrical capacity and low-temperature properties of batteries. Further objects of the invention are to provide polymer gel electrolyte-forming compositions and polymer gel electrolytes prepared using the above nonaqueous electrolyte solutions. Still further objects are to provide secondary cells and electrical double-layer capacitors fabricated using such nonaqueous electrolyte solutions or polymer gel electrolytes.

The inventors have conducted extensive investigations in order to achieve the above objects. As a result, they have found that, with the use of a nonaqueous electrolyte solution which contains a predetermined amount of specific compounds as additives, electrochemical reactions associated with charging and discharging cause films to form on the active materials making up the electrodes in electrochemical devices such as secondary cells, and that

these films deactivate the electrode surfaces so that decomposition of the nonaqueous solvent ceases, thereby making it possible to improve the low-temperature properties as well as the cycle properties associated with repeated charging and discharging in secondary cells and electrical double-layer capacitors. This discovery led ultimately to the present invention.

Accordingly, the invention provides the following.

(1) A nonaqueous electrolyte solution characterized by including a compound which reductively decomposes on a potential at least 1.0 V higher than the equilibrium potential of metallic lithium and lithium ions (a potential versus $Li/Li^+$ of +1.0 V or more).
(2) The nonaqueous electrolyte solution of (1) above which is characterized by including 0.01 to 7 wt% of at least one compound selected from Compound Group (A) below as the compound which reductively decomposes on a potential at least 1.0 V higher than the equilibrium potential of metallic lithium and lithium ions, (B) an ion-conductive salt, and (C) an organic electrolyte.
(A) maleic anhydride and derivatives thereof (A1)
N-methylmaleimide and derivatives thereof (A2)
N-vinylpyrrolidone and derivatives thereof (A3)
tetrahydrofurfuryl (meth)acrylate and derivatives thereof (A4)
vinyloxazoline and derivatives thereof (A5)
propanesultone, butanesultone and derivatives thereof (A6)
vinylene carbonate and derivatives thereof (A7)
N-vinylcaprolactam and derivatives thereof (A8)
2-vinyl-1,3-dioxolane and derivatives thereof (A9)
vinylethylene carbonate and derivatives thereof (A10)
butadienesulfone (A11)
fluoroethylene carbonate (A12)
ethylene sulfite and derivatives thereof (A13)
(3) The nonaqueous electrolyte solution of (1) or (2) above which is characterized in that the organic electrolyte (C) includes propylene carbonate.
(4) The nonaqueous electrolyte solution of (3) above which is characterized by having a propylene carbonate content of 1 to 20 wt%.
(5) A polymer gel electrolyte-forming composition which is characterized by including a nonaqueous electrolyte solution of any one of (1) to (4) above and a compound having at least two reactive double bonds on the molecule (exclusive of the compounds in Compound Group (A).
(6) The polymer gel electrolyte-forming composition of (5) above which is characterized by containing a straight-chain or branched linear polymeric compound.
(7) A polymer gel electrolyte which is characterized in that it can be obtained by gelating the polymer gel electrolyte-forming composition of (5) or (6) above.
(8) A secondary cell having a positive electrode and a negative electrode, a separator between the positive and negative electrodes, and an electrolyte solution, which secondary cell is characterized in that the electrolyte solution is the nonaqueous electrolyte solution of any one of (1) to (4) above.
(9) A secondary cell having a positive electrode, a negative electrode and an electrolyte, which secondary cell is characterized in that the electrolyte is the polymer gel electrolyte of (7) above.
(10) The secondary cell of (8) or (9) above which is characterized in that the positive electrode includes a current collector made of aluminum foil or aluminum oxide foil, and the negative electrode includes a current collector made of aluminum foil, aluminum oxide foil, copper foil, or metal foil having a surface covered with a copper plating film.
(11) An electrical double-layer capacitor having a pair of polarizable electrodes, a separator between the polarizable electrodes and an electrolyte solution, which electrical double-layer capacitor is characterized in that the electrolyte solution is the nonaqueous electrolyte solution of any one of (1) to (4) above.
(12) An electrical double-layer capacitor having an electrolyte between a pair of polarizable electrodes, which electrical double-layer capacitor is characterized in that the electrolyte is the polymer gel electrolyte of (7) above.
(13) The electrical double-layer capacitor of (11) or (12) above which is characterized in that the pair of polarizable electrodes includes a positive electrode current collector made of aluminum foil or aluminum oxide foil, and a negative electrode current collector made of aluminum foil, aluminum oxide foil, copper foil, or metal foil having a surface covered with a copper plating film.

BRIEF DESCRIPTION OF THE DIAGRAM

FIG. 1 is a sectional view showing a laminated secondary cell according to one embodiment of the invention.

BEST MODE FOR CARRYING OUT THE INVENTION

The invention is described more fully below.

The nonaqueous electrolyte solution according to the invention includes a compound which reductively decomposes on a potential at least 1.0 V higher than the equilibrium potential of metallic lithium and lithium ions (a potential versus $Li/Li^+$ of +1.0 V or more). The compound is referred to hereinafter as a "reducible compound."

Although the reducible compound is not subject to any particular limitation provided it reductively decomposes on the above potential, preferred use can be made of one or more compound selected from Compound Group (A) below.

The above reduction potential can be measured by cyclic voltammetry at a sweep rate of 10 to 100 mV/s using a solution of 0.5 to 3 M of lithium salt dissolved in an organic electrolyte composed of one or more substance selected from, e.g., ethylene carbonate, propylene carbonate and vinylene carbonate as the electrolyte, using platinum as the working electrode and counter electrode, and using metallic lithium as the reference electrode. The reduction potential here is the potential when a rise in the current is observed on the reduction side.

(A) maleic anhydride and derivatives thereof (A1)
N-methylmaleimide and derivatives thereof (A2)
N-vinylpyrrolidone and derivatives thereof (A3)
tetrahydrofurfuryl (meth)acrylate and derivatives thereof (A4)
vinyloxazoline and derivatives thereof (A5)
propanesultone, butanesultone and derivatives thereof (A6)
vinylene carbonate and derivatives thereof (A7)
N-vinylcaprolactam and derivatives thereof (A8)
2-vinyl-1,3-dioxolane and derivatives thereof (A9)
vinylethylene carbonate and derivatives thereof (A10)
butadienesulfone (A11)
fluoroethylene carbonate (A12)
ethylene sulfite and derivatives thereof (A13)

Compounds A1 to A13 in Compound Group (A) of reducible compounds are believed to form what is known as a solid electrolyte interphase (SEI) film on the active materials of secondary cells, particularly the negative electrode active material, due to the electrochemical reactions associated with charging and discharging. The negative electrode surface is inactivated by the SEI film that has formed, enabling decomposition of the nonaqueous solvent at the negative electrode to be suppressed.

As a result, propylene carbonate-based solvents, which have hitherto been difficult to use because they undergo considerable decomposition on the negative electrode, can now be employed as the electrolyte solvent. Even in cases where nonaqueous solvents other than propylene carbonate-based solvents are used, it appears that the desirable formation of an SEI film on the active material similarly occurs, thus making it possible to improve the cycle properties and low-temperature characteristic of secondary cells and other electrochemical devices.

The general structural formulas of compounds A1 to A13 in above Compound Group (A) are shown below.

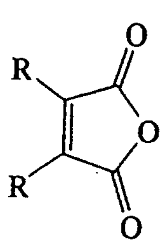

A1

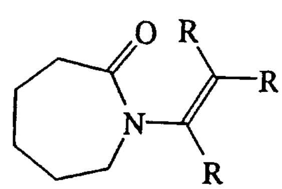

A8

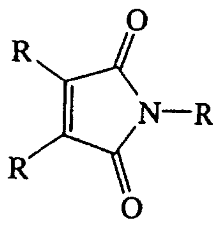

A2

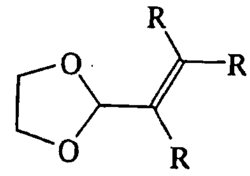

A9

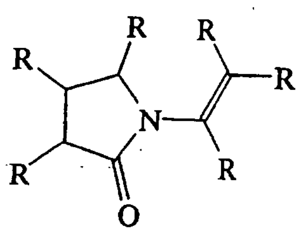

A3

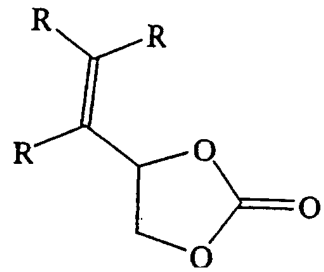

A10

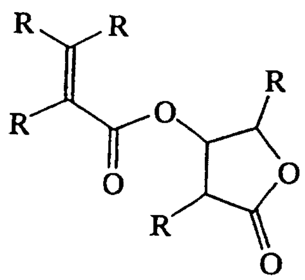

A4

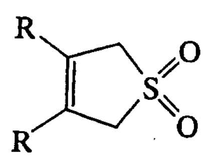

A11

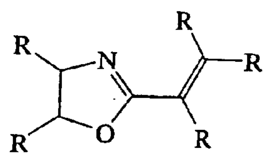

A5

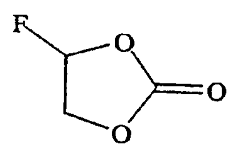

A12

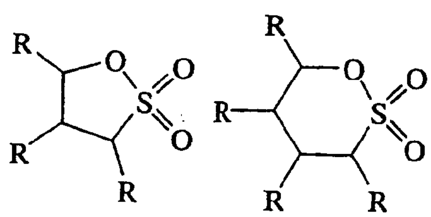

A6

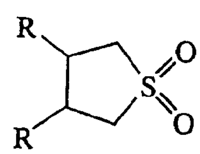

A13

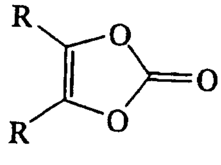

A7

In the above formulas, each R is independently a hydrogen atom or a substituted or unsubstituted monovalent hydrocarbon group of 1 to 20 carbons, and preferably 1 to 5 carbons.

Illustrative examples of the monovalent hydrocarbon groups include alkyls such as methyl, ethyl, propyl, isopropyl, butyl, isobutyl, tert-butyl, pentyl, neopentyl, hexyl, cyclohexyl, octyl, nonyl and decyl; aryls such as phenyl, tolyl and xylyl; aralkyls such as benzyl, phenylethyl and phenylpropyl; alkenyls such as vinyl, allyl, propenyl, isopropenyl, butenyl, hexenyl, cyclohexenyl and octenyl; and these groups in which some or all of the hydrogen atoms are substituted with halogen atoms such as fluorine, bromine or chlorine, or cyano groups.

In the invention, the overall content of compounds selected from Compound Group (A) is 0.01 to 7 wt%. At a content of less than 0.01 wt%, the addition of these compounds has an inadequate effect (i.e., formation of an SEI film on the negative electrode active material), making it impossible to suppress the decomposition of nonaqueous solvents such as propylene carbonate-based solvents at the negative electrode. On the other hand, at a content of more than 7 wt%, the low-temperature characteristic of the cell decreases. An overall content of 0.05 to 5 wt%, and especially 0.1 to 3 wt%, is preferred.

In addition to a reducible compound, the nonaqueous electrolyte solution of the invention includes also (B) an ion-conductive salt and (C) an organic electrolyte.

The ion-conductive salt B may be any that is capable of being used in nonaqueous electrolyte-based secondary cells (e.g., lithium secondary cells) and electrical double-layer capacitors. Ion-conductive salts that may be used include alkali metal salts and quaternary ammonium salts.

Preferred alkali metal salts are lithium salts, sodium salts and potassium salts. Specific examples include: [1] lithium salts such as lithium tetrafluoroborate, lithium hexafluorophosphate, lithium perchlorate, lithium trifluoromethanesulfonate, the sulfonyl imide lithium salts of general formula (1) below, the sulfonyl methide lithium salts of general formula (2) below, lithium acetate, lithium trifluoroacetate, lithium benzoate, lithium p-toluenesulfonate, lithium nitrate, lithium bromide, lithium iodide and lithium tetraphenylborate; [2] sodium salts such as sodium perchlorate, sodium iodide, sodium tetrafluoroborate, sodium hexafluorophosphate, sodium trifluoromethanesulfonate and sodium bromide; and [3] potassium salts such as potassium iodide, potassium tetrafluoroborate, potassium hexafluorophosphate and potassium trifluoromethanesulfonate.

$$(R^1\text{-}SO_2)(R^2\text{-}SO_2)NLi \quad (1)$$

$$(R^3\text{-}SO_2)(R^4\text{-}SO_2)(R^5\text{-}SO_2)CLi \quad (2)$$

In above formulas (1) and (2), $R^1$ to $R^5$ are each independently $C_{1-4}$ perfluoroalkyl groups which may have one or two ether linkages.

Illustrative examples of the sulfonyl imide lithium salts of general formula (2) include $(CF_3SO_2)_2NLi$, $(C_2F_5SO_2)_2NLi$, $(C_3F_7SO_2)_2NLi$, $(C_4F_9SO_2)_2NLi$, $(CF_3SO_2)(C_2F_5SO_2)NLi$, $(CF_3SO_2)(C_3F_7SO_2)NLi$, $(CF_3SO_2)(C_4F_9SO_2)NLi$, $(C_2F_5SO_2)(C_3F_7SO_2)NLi$, $(C_2F_5SO_2)(C_4F_9SO_2)NLi$ and $(CF_3OCF_2SO_2)_2NLi$.

Illustrative examples of the sulfonyl methide lithium salts of general formula (3) include $(CF_3SO_2)_3CLi$, $(C_2F_5SO_2)_3CLi$, $(C_3F_7SO_2)_3CLi$, $(C_4F_9SO_2)_3CLi$, $(CF_3SO_2)_2(C_2F_5O_2)CLi$, $(CF_3SO_2)_2(C_3F_7SO_2)CLi$, $(CF_3SO_2)_2(C_4F_9SO_2)CLi$, $(CF_3SO_2)(C_2F_5SO_2)_2CLi$, $(CF_3SO_2)(C_3F_7SO_2)_2CLi$, $(CF_3SO_2)(C_4F_9SO_2)_2CLi$, $(C_2F_5SO_2)_2(C_3F_7SO_2)CLi$, $(C_2F_5SO_2)_2(C_4F_9SO_2)CLi$ and $(CF_3OCF_2SO_2)_3CLi$.

Illustrative examples of the quaternary ammonium salts include tetramethylammonium hexafluorophosphate, tetraethylammonium hexafluorophosphate, tetrapropylammonium hexafluorophosphate, triethylmethylammonium hexafluorophosphate, triethylmethylammonium tetrafluoroborate, tetraethylammonium tetrafluoroborate and tetraethylammonium perchlorate. Other quaternary salts that may be used include acyclic amidines, cyclic amidines (e.g., imidazoles, imidazolines, pyrimidines, 1,5-diazabicyclo[4.3.0]non-5-ene (DBN), 1,8-diazabicyclo[5.4.0]undec-7-ene (DBU)), pyrroles, pyrazoles, oxazoles, thiazoles, oxadiazoles, thiadiazoles, triazoles, pyridines, pyrazines, triazines, pyrrolidines, morpholines, piperidines and piperazines.

Of the above ion-conductive salts, lithium tetrafluoroborate, triethylmethylammonium tetrafluoroborate, lithium hexafluorophosphate, sulfonyl imide lithium salts of general formula (1) and sulfonyl methide lithium salts of general formula (2) are preferred because of their particularly high ionic conductivity and excellent thermal stability. These ion-conductive salts may be used singly or as combinations of two or more thereof.

In the case of electrical double-layer capacitors, aside from the above-mentioned ion-conductive salts, other electrolyte salts commonly employed in electrical double-layer capacitors may be used. Preferred examples include salts obtained by combining a quaternary onium cation of the general formula $R^6R^7R^8R^9N^+$ or $R^{10}R^{11}R^{12}R^{13}P^+$ (wherein $R^6$ to $R^{13}$ are each independently alkyls of 1 to 10 carbons) with an anion such as $BF_4^-$, $N(CF_3SO_2)_2^-$, $PF_6^-$ or $ClO_4^-$.

Illustrative examples include $(C_2H_5)_4PBF_4$, $(C_3H_7)_4PBF_4$, $(C_4H_9)_4PBF_4$, $(C_6H_{13})_4PBF_4$, $(C_4H_9)_3CH_3PBF_4$, $(C_2H_5)_3(Ph\text{-}CH_2)PBF_4$ (wherein Ph stands for phenyl), $(C_2H_5)_4PPF_6$, $(C_2H_5)PCF_3SO_2$, $(C_2H_5)_4NBF_4$, $(C_4H_9)_4NBF_4$,

$(C_6H_{13})_4NBF_4$, $(C_2H_5)_6NPF_6$, $LiBF_4$, $LiCF_3SO_3$ and $CH_3(C_2H_5)_3NBF_4$. These may be used alone or as combinations of two or more thereof.

The concentration of the ion-conductive salt in the nonaqueous electrolyte solution is generally 0.05 to 3 mol/L, and preferably 0.1 to 2 mol/L. Too low a concentration may make it impossible to obtain a sufficient ionic conductivity. On the other hand, if the concentration is too high, the salt may not dissolve completely in the solvent.

Examples of the organic electrolyte serving as component C include cyclic and acyclic carbonates, acyclic carboxylates, cyclic and acyclic ethers, phosphates, lactone compounds, nitrile compounds and amide compounds, as well as mixtures thereof.

Examples of suitable cyclic carbonates include alkylene carbonates such as propylene carbonate (PC), ethylene carbonate (EC) and butylene carbonate. Examples of suitable acyclic carbonates include dialkyl carbonates such as dimethyl carbonate (DMC), methyl ethyl carbonate (MEC) and diethyl carbonate (DEC). Examples of suitable acyclic carboxylates include methyl acetate and methyl propionate. Examples of suitable cyclic and acyclic ethers include tetrahydrofuran, 1,3-dioxolane and 1,2-dimethoxyethane. Examples of suitable phosphates include trimethyl phosphate, triethyl phosphate, ethyldimethyl phosphate, diethylmethyl phosphate, tripropyl phosphate, tributyl phosphate, tri(trifluoromethyl) phosphate, tri(trichloromethyl) phosphate, tri(trifluoroethyl) phosphate, tri(triperfluoroethyl) phosphate, 2-ethoxy-1,3,2-dioxaphosphoran-2-one, 2-trifluoroethoxy-1,3,2-dioxaphosphoran-2-one and 2-methoxyethoxy-1,3,2-dioxaphosphoran-2-one. An example of a suitable lactone compound is $\gamma$-butyrolactone. An example of a suitable nitrile compound is acetonitrile. An example of a suitable amide compound is dimethylformamide.

Of these, cyclic carbonates, acyclic carbonates, phosphates and mixtures thereof are preferred because they provide a good battery performance such as high charge/discharge characteristics and high output characteristics. The use of propylene carbonate is especially preferred.

When propylene carbonate is used, the propylene carbonate content in the nonaqueous electrolyte solution is preferably 1 to 20 wt%, and most preferably 2 to 15 wt%.

At a propylene carbonate content of less than 1 wt%, the discharge characteristics at low temperature may be insufficient. On the other hand, at a propylene carbonate content of more than 20 wt%, decomposition reactions on the surface of the negative electrode may become considerable.

To lower the resistance at the interface between the positive and negative electrodes and thereby enhance the charge/discharge cycle properties, and to enhance its ability to wet the separator, the electrolyte solution of the invention may optionally include also one or more of various compounds, including polyimides, polyacetals, polyalkylene sulfides, polyalkylene oxides, cellulose ester, polyvinyl alcohol, polybenzoimidazoles, polybenzothiazoles, silicone glycols, vinyl acetate, acrylic acid, methacrylic acid, polyether-modified siloxanes, polyethylene oxides, amide compounds, amine compounds, phosphoric acid compounds and fluorinated nonionic surfactants. Of these, the use of fluorinated nonionic surfactants is preferred.

The polymer gel electrolyte-forming composition of the invention is characterized by including the above described nonaqueous electrolyte solution and a compound having at least two reactive double bonds on the molecule (exclusive of the compounds in above Compound Group (A)), and preferably includes also a straight-chain or branched linear polymeric compound.

That is, in cases where a polymer gel electrolyte obtained by gelating this polymer gel electrolyte-forming composition is formed into a thin film and used as the electrolyte in an electrochemical device such as a secondary cell, to increase the physical strength (e.g., shape retention), a compound having at least two reactive double bonds on the molecule is added. This compound reacts to form a three-dimensional network structure, thereby increasing the shape-retaining ability of the electrolyte.

If the polymer gel electrolyte-forming composition contains also a linear polymeric compound, there can be obtained a gel having a semi-interpenetrating polymer network (semi-IPN) structure in which the molecular chains of the linear polymeric compound are intertwined with the three-dimensional network structure of the polymer formed by crosslinkage of the reactive double bond-bearing compound. The shape retention and strength of the electrolyte can thus be further increased, and its adhesive properties and ion conductivity also enhanced.

Illustrative examples of such compounds having two or more reactive double bonds on the molecule include divinylbenzene, divinylsulfone, allyl methacrylate, ethylene glycol dimethacrylate, diethylene glycol dimethacrylate, triethylene glycol dimethacrylate, polyethylene glycol dimethacrylate (average molecular weight, 200 to 1,000), 1,3-butylene glycol dimethacrylate, 1,6-hexanediol dimethacrylate, neopentyl glycol dimethacrylate, polypropylene glycol dimethacrylate (average molecular weight, 400), 2-hydroxy-1,3-dimethaaryloxypropane, 2,2-bis[4-(methacryloxyethoxy)phenyl]propane, 2,2-bis[4-(methacryloxyethoxy-diethoxy)phenyl]propane, 2,2-bis[4-(methacryloxyethoxy-polyethoxy)phenyl]propane, ethylene glycol diacrylate, diethylene glycol diacrylate, triethylene glycol diacrylate, polyethylene glycol diacrylate (average molecular weight, 200 to 1,000), 1,3-butylene glycol diacrylate, 1,6-hexanediol diacrylate, neopentyl glycol diacrylate, polypropylene glycol diacrylate (average molecular weight, 400), 2-hydroxy-1,3-diacryloxypropane, 2,2-bis[4-(acryloxyethdxy)phenyl]progane, 2,2-bis[4-(acryloxyethoxy-diethoxy)phenyl]propane, 2,2-bis[4-(acryloxyethoxy-polyethoxy)phenyl]propane, trimethylolpropane triacrylate, trimethylolpropane trimethacrylate, tetramethylolmethane triacrylate, tetramethylolmethane tetraacrylate, water-soluble urethane diacrylate, water-soluble urethane dimethacrylate, tricyclodecane dimethanol acrylate, hydrogenated dicyclopentadiene diacrylate, polyester diacrylate and polyester dimethacrylate.

If necessary, a compound having one acrylic acid group or methacrylic acid group on the molecule may be added. Examples of such compounds include acrylic and methacrylic acid esters such as glycidyl methacrylate, glycidyl acrylate, methoxydiethylene glycol methacrylate, methoxytriethylene glycol methacrylate and methoxypolyethylene glycol methacrylate (average molecular weight, 200 to 1,200); as well as methacryloyl isocyanate, 2-hydroxymethylmethacrylic acid and N,N-dimethylaminoethylmethacrylic acid. Other reactive double bond-containing compounds may be added as well, such as acrylamides (e.g., N-methylolacrylamide, methylenebisacrylamide, diacetoneacrylamide), and vinyl compounds such as vinyloxazolines.

To form a polymer three-dimensional network structure, a compound having at least two reactive double bonds on the molecule must be added. That is, a polymer three-dimensional network structure cannot be formed with only compounds having but a single reactive double bond, such as methyl methacrylate. At least some addition of a compound bearing two or more reactive double bonds is required.

Of the above reactive double bond-bearing compounds, especially preferred reactive monomers include polyoxyalkylene component-bearing diesters of general formula (3) below. The use of these in combination with a polyoxyalkylene component-bearing monoester of formula (4) below and a triester is recommended.

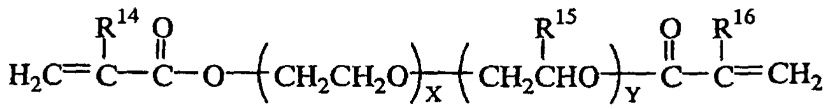 (3)

In formula (3), $R^{14}$ to $R^{16}$ are each independently a hydrogen atom or an alkyl group having 1 to 6 carbons, and preferably 1 to 4 carbons, such as methyl, ethyl, n-propyl, i-propyl, n-butyl, i-butyl, s-butyl and t-butyl; and the letters X and Y satisfy the condition $X \geq 1$ and $Y \geq 0$ or the condition $X \geq 0$ and $Y \geq 1$. $R^{14}$ to $R^{16}$ are most preferably methyl, ethyl, n-propyl, i-propyl, n-butyl, i-butyl, s-butyl or t-butyl.

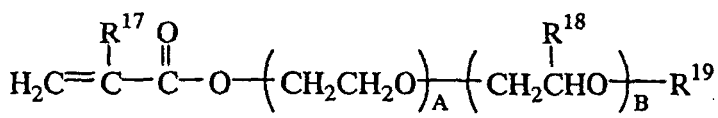 (4)

In formula (4), $R^{17}$ to $R^{19}$ are each independently a hydrogen atom or an alkyl group having 1 to 6 carbons, and preferably 1 to 4 carbons, such as methyl, ethyl, n-propyl, i-propyl, n-butyl, i-butyl, s-butyl and t-butyl; and the letters A and B satisfy the condition $A \geq 1$ and $B \geq 0$ or the condition $A \geq 0$ and $B \geq 1$. $R^{17}$ to $R^{19}$ are most preferably methyl, ethyl, n-propyl, i-propyl, n-butyl, i-butyl, s-butyl or t-butyl.

Preferred examples of the compound of above formula (3) are those in which X is 2 or 9, Y is 0, and both $R^{14}$ and $R^{16}$ are $CH_3$. Preferred examples of the compound of above formula (4) are those in which A is 2 or 9, B is 0, and both $R^{17}$ and $R^{19}$ are $CH_3$.

The triester is preferably trimethylolpropane trimethacrylate.

A mixture of the above polyoxyalkylene component-bearing diester and polyoxyalkylene component-bearing monoester with the ion-conductive salt and the organic electrolyte is exposed to radiation (e.g., UV light, electron beams, x-rays, gamma rays, microwaves, radio-frequency radiation) or heated to form a polymeric three-dimensional crosslinked network structure.

The above-described polyoxyalkylene component-bearing diester, when added alone to the polymeric compound serving as component A and subjected to polymerization, can generally form a polymeric three-dimensional network. However, as already noted, polyoxyalkylene branched chains can be introduced onto the three-dimensional network by adding a polyoxyalkylene component-bearing monoester, which is a monofunctional monomer, to the polyoxyalkylene component-bearing diester.

The relative proportions of the polyoxyalkylene component-bearing diester to polyoxyalkylene component-bearing monoesters and triesters are suitably selected according to the length of the polyoxyalkylene components and are not subject to any particular limitation. However, to enhance the gel strength, it is preferable for the diester/monoester ratio to be in a range of 0.1 to 2, and especially 0.3 to 1.5, and for the diester/triester ratio to be in a range of 2 to 15, and especially 3 to 10.

It is also desirable to add the above-mentioned reactive double bond-bearing straight-chain or branched linear

polymer so as to form a semi-IPN structure. The straight-chain or branched linear polymeric compound required to prepare a polymer gel electrolyte having a semi-IPN structure is not subject to any particular limitation, provided it is a linear polymeric compound. Examples of such polymeric compounds include (a) hydroxyalkyl polysaccharide derivatives, (b) oxyalkylene branched polyvinyl alcohol derivatives, (c) polyglycidol derivatives, and (d) cyano-substituted monovalent hydrocarbon group-bearing polyvinyl alcohol derivatives.

Examples of suitable hydroxyalkyl polysaccharide derivatives (a) include (1) hydroxyethyl polysaccharides obtained by reacting ethylene oxide with a polysaccharide of natural origin such as cellulose, starch or pullulan, (2) hydroxypropyl polysaccharides obtained by reacting propylene oxide with such polysaccharides, and (3) dihydroxypropyl polysaccharides obtained by reacting glycidol or 3-chloro-1,2-propanediol with such polysaccharides. Some or all of the hydroxyl groups on these hydroxyalkyl polysaccharides may be capped with substituents through ester or ether linkages.

The above hydroxyalkyl polysaccharides have a molar substitution of 2 to 30, and preferably 2 to 20. At a molar substitution of less than 2, the ability of the polysaccharide to dissolve ion-conductive salts may become so low as to make it unsuitable for use.

Oxyalkylene branched polyvinyl alcohol derivatives (b) suitable for use as the polymeric compound include those which bear on the molecule polyvinyl alcohol units of general formula (5) below, which have an average degree of polymerization of at least 20, and in which some or all of the hydroxyl groups on the polyvinyl alcohol units are substituted with oxyalkylene-bearing groups to an average molar substitution of at least 0.3.

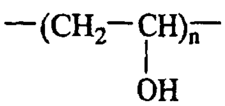

(5)

In formula (5), the letter n is preferably from 20 to 10,000.

Because this type of polymeric compound has a high oxyalkylene fraction, it has the ability to dissolve a large amount of ion-conductive salt. In addition, the molecule contains many oxyalkylene segments which permit the movement of ions, resulting in a high ion mobility. This type of polymeric compound is thus capable of exhibiting a high ionic conductivity. Moreover, because such polymeric compounds have a high tackiness, they act as a binder component and are capable of firmly bonding the positive and negative electrodes. In addition, compositions obtained by dissolving an ion-conductive salt to a high concentration in a polymer electrolyte-forming polymer made of this polymeric compound are highly suitable for use as polymer gel electrolytes for film cells.

Examples of such polymeric compounds include [1] polymeric compounds obtained by reacting a polyvinyl alcohol unit-bearing polymeric compound with an oxirane compound such as ethylene oxide, propylene oxide or glycidol (e.g., dihydroxypropylated polyethylene vinyl alcohol, propylene oxide-modified polyvinyl alcohol); and [2] polymeric compounds obtained by reacting a polyvinyl alcohol unit-bearing polymeric compound with a polyoxyalkylene compound having terminal hydroxy-reactive substituents.

The reaction of the polyvinyl alcohol unit-bearing polymeric compound with an oxirane compound or an oxyalkylene compound can be carried out using a basic catalyst such as sodium hydroxide, potassium hydroxide and various amine compounds.

Here, the polyvinyl alcohol unit-bearing polymeric compound is a polymeric compound which has polyvinyl alcohol units on the molecule, which has a number-average degree of polymerization of at least 20, preferably at least 30, and most preferably at least 50, and in which some or all of the hydroxyl groups on the polyvinyl alcohol units are substituted with oxyalkylene-containing groups. For the sake of handleability, the upper limit in the number-average degree of polymerization in this case is preferably 2,000 or less, more preferably 500 or less, and most preferably 200 or less.

It is most advantageous for the polyvinyl alcohol unit-bearing polymeric compound to be a homopolymer which satisfies the above range in the number-average degree of polymerization and in which the fraction of polyvinyl alcohol units within the molecule is at least 98 mol%. However, use can also be made of polyvinyl alcohol unit-bearing polymeric compounds which satisfy the above range in the number-average degree of polymerization and have a polyvinyl alcohol fraction of preferably at least 60 mol%, and more preferably at least 70 mol%. Illustrative examples include polyvinyl formal in which some of the hydroxyl groups on the polyvinyl alcohol have been converted to formal, modified polyvinyl alcohols in which some of the hydroxyl groups on the polyvinyl alcohol have been alkylated, poly(ethylene vinyl alcohol), partially saponified polyvinyl acetate, and other modified polyvinyl alcohols.

Some or all of the hydroxyl groups on the polyvinyl alcohol units of the polymeric compound are substituted with oxyalkylene-containing groups (moreover, some of the hydrogen atoms on these oxyalkylene groups may be substituted with hydroxyl groups) to an average molar substitution of at least 0.3. The proportion of hydroxyl groups

substituted with oxyalkylene-containing groups is preferably at least 30 mol%, and more preferably at least 50 mol%. The average molar substitution (MS) can be determined by accurately measuring the weight of the polyvinyl alcohol charged and the weight of the reaction product.

The polyglycidol derivative serving as component (c) is a compound containing units of formula (6) below (referred to hereinafter as "A units")

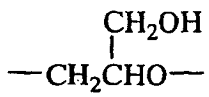

(6)

and units of formula (7) (referred to hereinafter as "B units")

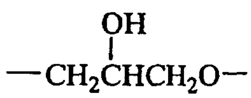

(7) .

The ends of the molecular chains on the compound are capped with specific substituents.

The polyglycidol can be prepared by polymerizing glycidol or 3-chloro-1,2-propanediol, although it is generally desirable to carry out polymerization using glycidol as the starting material, and using a basic catalyst or a Lewis acid catalyst.

The total number of A and B units on the polyglycidol molecule is preferably at least two, more preferably at least six, and most preferably at least ten. There is no particular upper limit, although the total number of such groups generally is not more than about 10,000. The total number of these units may be set as appropriate for the required flowability, viscosity and other properties of the polyglycidol. The ratio of A units to B units (A:B) on the molecule is within a range of preferably 1/9 to 9/1, and especially 3/7 to 7/3. The A and B units do not appear in a regular order, and may be arranged in any combination.

The polyglycidol has a polyethylene glycol equivalent weight-average molecular weight (Mw), as determined by gel permeation chromatography (GPC), within a range of preferably 200 to 730,000, more preferably 200 to 100,000, and most preferably 600 to 20,000. The polydispersity (Mw/Mn) is preferably 1.1 to 20, and most preferably 1.1 to 10.

Some or all, and preferably at least 10 mol%, of the hydroxyl groups on these linear polymeric compounds (a) to (c) may be capped with one or more monovalent substituent selected from among halogen atoms, substituted and unsubstituted monovalent hydrocarbon groups of 1 to 10 carbons, $R^{20}CO$- groups (wherein $R^{20}$ is a substituted or unsubstituted monovalent hydrocarbon group of 1 to 10 carbons), $R^{20}{}_3Si$- groups (wherein $R^{20}$ is as defined above), amino groups, alkylamino groups and phosphorus atom-containing groups to form a polymer derivative having capped hydroxyl groups.

Illustrative examples of the substituted and unsubstituted monovalent hydrocarbon groups of 1 to 10 carbons include alkyls such as methyl, ethyl, propyl, isopropyl, t-butyl and pentyl; aryls such as phenyl and tolyl; aralkyls such as benzyl; alkenyls such as vinyl; and any of the foregoing in which some or all of the hydrogen atoms have been substituted with halogen atoms, cyano groups, hydroxyl groups or amino groups. Any one or combination of two or more of these types of groups may be used.

The hydroxyl groups on oxyalkylene chain-bearing linear polymer compounds (a) to (c) are capped with the above substituents for the following purposes.

(1) In a polymer containing a high concentration of ion-conductive salt, the cations and the counter ions (anions) which have dissociated readily recombine within a polymer matrix having a low dielectric constant, resulting in a decline in conductivity. Because increasing the polarity of the polymer matrix discourages ion association, one purpose is to increase the dielectric constant of the matrix polymer by introducing polar groups onto the hydroxyl groups of oxyalkylene group-bearing linear polymeric compounds (a) to (c).

(2) Another purpose is to provide linear polymeric compounds (a) to (c) with desirable characteristics, such as hydrophobic properties and fire retardance.

To increase the dielectric constant of linear polymeric compounds (a) to (c) (purpose (1) above), the oxyalkylene chain-bearing linear polymeric compounds (a) to (c) are reacted with a hydroxy-reactive compound so as to cap the hydroxyl groups on these linear polymeric compounds with highly polar substituents.

Although the highly polar substituents used for this purpose are not subject to any particular limitation, neutral substituents are preferable to ionic substituents. Exemplary substituents include substituted and unsubstituted monovalent hydrocarbon groups of 1 to 10 carbons, and $R^{20}CO$- groups (wherein $R^{20}$ is as defined above). If necessary, capping may also be carried out with other suitable substituents, such as amino groups or alkylamino groups.

To confer linear polymeric compounds (a) to (c) with hydrophobic properties and fire retardance (purpose (2) above), the hydroxyl groups on the above linear polymeric compounds may be capped with, for example, halogen atoms, $R^{20}_3Si$- groups (wherein $R^{20}$ is as defined above) or phosphorus-containing groups.

Describing the above substituents more specifically, examples of suitable halogen atoms include fluorine, bromine and chlorine. The substituted or unsubstituted monovalent hydrocarbon groups of 1 to 10 carbons (preferably 1 to 8 carbons) may be the same as those mentioned above.

Examples of suitable $R^{20}_3Si$- groups include those in which $R^{20}$ represents the same substituted or unsubstituted monovalent hydrocarbon groups having 1 to 10 carbons (preferably 1 to 6 carbons) as above. $R^{20}$ preferably stands for alkyl groups. Trialkylsilyl groups, and especially trimethylsilyl groups, are preferred.

Additional examples of suitable substituents include amino groups, alkylamino groups and phosphorus-containing groups.

The proportion of end groups capped with the above substituents is at least 10 mol%, preferably at least 50 mol%, and most preferably at least 90 mol%. It is even possible to cap substantially all the end groups with the above substituents, representing a capping ratio of about 100 mol%.

Because capping all the hydroxyl end groups on the polymer molecular chain with halogen atoms, $R^{20}_3Si$- groups or 5 phosphorus-containing groups may lower the ion-conductive salt-dissolving ability of the polymer itself, it is essential to introduce a suitable amount of substituents while taking into account the degree of such solubility. Specifically, it is advantageous to cap 10 to 95 mol%, preferably 50 to 95 mol%, and most preferably 50 to 90 mol%, of all the end groups (hydroxyl groups).

In the invention, of the above-mentioned substituents, cyano-substituted monovalent hydrocarbon groups are especially preferred. Specific examples include cyanoethyl, cyanobenzyl, cyanobenzoyl and other substituents having cyano groups bonded to an alkyl group.

The above-mentioned cyano-substituted monovalent hydrocarbon group-bearing polyvinyl alcohol derivative (d) is preferably a polymeric compound which bears on the molecule polyvinyl alcohol units of above general formula (5), which has an average degree of polymerization of at least 20, and in which some or all of the hydroxyl groups on the polyvinyl alcohol units are substituted with cyano-substituted monovalent hydrocarbon groups.

Because this polymeric compound has relatively short side chains, the polymer gel electrolyte-forming composition can be held to a low viscosity and penetration of this composition into a cell or capacitor assembly, can be carried out rapidly, making it possible to enhance the productivity and performance of cells and capacitors.

Examples of such polymeric compounds include polyvinyl alcohols in which some or all of the hydroxyl groups have been substituted with cyanoethyl, cyanobenzyl or cyanobenzoyl groups. Cyanoethyl-substituted polyvinyl alcohol is especially preferred because the side chains are short.

Various known methods may be used to substitute the hydroxyl groups on the polyvinyl alcohol with cyano-substituted monovalent hydrocarbon groups.

In the practice of the invention, when a compound having at least two reactive double bonds on the molecule and a linear polymeric compound are used as components in the polymer gel electrolyte-forming composition, the mixture obtained by mixing these two ingredients (referred to hereinafter as the "pregel composition") has a viscosity at 20°C, as measured with a Brookfield viscometer, of preferably not more than 100 cP, and more preferably not more than 50 cP.

Because the use of a pregel composition having such a viscosity can lower the viscosity of the polymer gel electrolyte-forming composition, penetration by the polymer gel electrolyte-forming composition into a cell assembly or the like can be increased, thus making it possible to improve the cell characteristics.

It is desirable for the above polymer gel electrolyte-forming composition to be adjusted for use to a viscosity at 20°C, as measured with a Brookfield viscometer, of not more than 100 cP, more preferably not more than 50 cP, and most preferably not more than 30 cP.

The polymer gel electrolyte of the invention is characterized in that it can be obtained by gelating the above-described polymer gel electrolyte-forming composition.

That is, a polymer gel electrolyte which has a three-dimensional network structure and contains an electrolyte solution can be obtained by exposing a composition formulated from the above-described electrolyte solution and the compound having at least two reactive double bonds on the molecule to radiation (e.g., UV light, electron beams, x-rays, gamma rays, microwaves, radio-frequency radiation) or subjecting it heat.

Moreover, by similarly subjecting a composition formulated from the above-described electrolyte solution, the compound having reactive double bonds on the molecule and the linear polymeric compound to irradiation such as with UV light or to heating, there can be obtained a polymer gel electrolyte having a three-dimensional crosslinked network (semi-IPN) structure in which the three-dimensional network structure formed by reacting or polymerizing the compound having two or more reactive double bonds on the molecule is intertwined with the molecular chains of the

linear polymeric compound.

It is particularly advantageous to employ a method in which the compound having at least two reactive double bonds on the molecule is reacted or polymerized by heating to at least 50°C, and preferably at least 55°C. With the use of such a method, the cell assembly can be warmed, enabling the rate of penetration by the polymer gel electrolyte-forming composition into the cell assembly to be increased.

The above polymerization reaction is preferably a radical polymerization reaction. An initiator is generally added when the polymerization reaction is carried out.

No particular limitation is imposed on the polymerization initiator (catalyst). Any of various known polymerization initiators may be used, including photopolymerization initiators such as acetophenone, trichloroacetophenone, 2-hydroxy-2-methylpropiophenone, 2-hydroxy-2-methylisopropiophenone, 1-hydroxycyclohexyl ketone, benzoin ether, 2,2-diethoxyacetophenone and benzyl dimethyl ketal; high-temperature thermal polymerization initiators such as cumene hydroperoxide, t-butyl hydroperoxide, dicumyl peroxide and di-t-butyl peroxide; conventional thermal polymerization initiators such as benzoyl peroxide, lauroyl peroxide, persulfates, 2,2'-azobis(2,4-dimethylvaleronitrile), 2,2'-azobis(4-methoxy-2,4-dimethylvaleronitrile) and 2,2'-azobisisobutyronitrile; low-temperature thermal polymerization initiators (redox initiators) such as hydrogen peroxide-ferrous salts, persulfate-acidic sodium sulfite, cumene hydroperoxide-ferrous salts and benzoyl peroxide-dimethylaniline; and also peroxide-organometallic alkyls, triethylboron, diethylzinc, and oxygen-organometallic alkyls.

These initiators may be used alone or as a mixture of two or more thereof. The initiator is typically added in an amount of 0.1 to 1 part by weight, and preferably 0.1 to 0.5 part by weight, per 100 parts by weight of the polymer gel electrolyte-forming composition. The addition of less than 0.1 part by weight may result in a considerable decline in the polymerization rate. On the other hand, the addition of more than 1 part by weight increases the number of reaction initiation sites and may result in the formation of a low-molecular-weight compound.

The polymer gel electrolyte of the invention has a three-dimensional network structure obtained by the reaction of the compound having two or more reactive double bonds on the molecule, and thus has an excellent strength and a high shape-retaining ability. When a linear polymeric compound is used to form a firm semi-interpenetrating polymer network structure in which the polymeric compound is intertwined with the three-dimensional network structure, the compatibility between the different polymer chains can be enhanced and the bonding strength between the phases increased, resulting in a dramatically improved shape-retaining ability.

Moreover, when the polymer gel electrolyte of the invention has a semi-interpenetrating polymer network structure, because the molecular structure is amorphous and has not crystallized, ion conductors can move unhindered within the molecule. Hence, the polymer gel electrolyte has a high conductivity on the order of $10^{-3}$ to $10^{-4}$ S/cm at room temperature, in addition to which it has a high tack and poses no risk of evaporation or liquid leakage. Such qualities make it highly suitable for use as a polymer gel electrolyte in various types of secondary cells (e.g., lithium ion secondary cells) and electrical double-layer capacitors.

The polymer gel electrolyte of the invention can be formed into a thin electrolyte membrane of uniform thickness using a method such as roller coating with an applicator roll, screen coating, doctor blade coating, spin coating or bar coating.

Next, the secondary cell and capacitor of the invention are described.

<u>Secondary Cell of the Invention</u>

The secondary cell of the invention includes a positive electrode, and a negative electrode, a separator between the positive and negative electrodes, and an electrolyte solution, and is characterized by the use of the above-described nonaqueous electrolyte solution as the electrolyte solution.

The positive electrode may be one produced by coating one or both sides of a positive electrode current collector with a positive electrode binder composition composed primarily of a binder polymer and a positive electrode active material. The positive electrode may also be formed by melting and blending a positive electrode binder composition composed primarily of a binder polymer and a positive electrode active material, then extruding the composition as a film.

The binder polymer may be any polymer suitable for use in the present application. For example, preferred use can be made of any one or combination of two or more of the following: (I) unsaturated polyurethane compounds, (II) polymeric materials having an interpenetrating network structure or a semi-interpenetrating network structure, (III) thermoplastic resins containing units of general formula (8) below

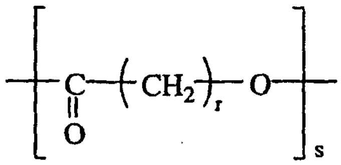

(8)

(wherein the letter r is from 3 to 5, and the letter s is an integer which is ≥5), and (IV) fluoropolymer materials. Of these binder polymers, the use of polymeric materials (I) to (III) results in a high adhesion, and can therefore increase the physical strength of the electrodes. Fluoropolymer materials (IV) have excellent thermal and electrical stability.

The above-mentioned unsaturated polyurethane compounds (I) are preferably ones prepared by reacting (A) an unsaturated alcohol having at least one (meth)acryloyl group and a hydroxyl group on the molecule, (B) a polyol compound of general formula (9) below

$$HO\text{-}[(R^{21})_h\text{-}(Z)_i\text{-}(R^{22})_j]_q\text{-}OH \qquad (9)$$

(wherein $R^{21}$ and $R^{22}$ are each independently a divalent hydrocarbon group of 1 to 10 carbons which may contain an amino, nitro, carbonyl or ether group; Z is -COO-, -OCOO-, $-NR^{23}CO-$ ($R^{23}$ being a hydrogen atom or an alkyl group of 1 to 4 carbons), -O- or an arylene group; the letters h, i and j are 0 or 1 to 10; and the letter q is an integer which is ≥1), (C) a polyisocyanate compound, and (D) an optional chain extender.

The unsaturated alcohol serving as component (A) is not subject to any particular limitation, provided the molecule bears at least one (meth)acryloyl group and a hydroxyl group. Illustrative examples include 2-hydroxyethyl acrylate, 2-hydroxypropyl acrylate, 2-hydroxyethyl methacrylate, 2-hydroxylpropyl methacrylate, diethylene glycol monoacrylate, diethylene glycol monomethacrylate, triethylene glycol monoacrylate and triethylene glycol monomethacrylate.

The polyol compound serving as component (B) may be, for example, a polyether polyol such as polyethylene glycol or a polyester polyol such as polycaprolactone. A polyol compound of general formula (9) above is especially preferred.

In above formula (9), $R^{21}$ and $R^{22}$ are each independently a divalent hydrocarbon group of 1 to 10 carbons, and preferably 1 to 6 carbons, which may contain an amino, nitro, carbonyl or ether group. Preferred examples include alkylene groups such as methylene, ethylene, trimethylene, propylene, ethylene oxide and propylene oxide.

The letter q is a number which is ≥1, preferably ≥5, and most preferably from 10 to 200.

The polyol compound serving as component (B) has a number-average molecular weight of preferably 400 to 10,000, and more preferably 1,000 to 5,000.

Illustrative examples of the polyisocyanate compound serving as component (C) include aromatic diisocyanates such as tolylene diisocyanate, 4,4'-diphenylmethane diisocyanate, p-phenylene diisocyanate, 1,5-naphthylene diisocyanate, 3,3'-dichloro-4,4'-diphenylmethane diisocyanate and xylylene diisocyanate; and aliphatic or alicyclic diisocyanates such as hexamethylene diisocyanate, isophorone diisocyanate, 4,4'-dicyclohexylmethane diisocyanate and hydrogenated xylylene diisocyanate.

The above unsaturated polyurethane compound is preferably one prepared from above components (A) to (C) and also a chain extender (D). Any chain extender commonly used in the preparation of thermoplastic polyurethane resins may be employed. Illustrative examples include glycols such as ethylene glycol and diethylene glycol; aliphatic diols such as 1,3-propanediol and 1,4-butanediol; aromatic or alicyclic diols such as 1,4-bis(β-hydroxyethoxy)benzene, 1,4-cyclohexanediol and xylylene glycol; diamines such as hydrazine, ethylenediamine, hexamethylenediamine, xylylenediamine and piperazine; and amino alcohols such as adipoyl hydrazide and isophthaloyl hydrazide. Any one or combinations of two or more of these may be used.

Use may also be made of a urethane prepolymer prepared by the preliminary reaction of the polyol compound serving as component (B) with the polyisocyanate compound serving as component (C).

In preparing an unsaturated polyurethane compound for use in the invention, it is advantageous to use the respective components in the following proportions: 100 parts by weight of component A; 100 to 20,000 parts by weight, and preferably 1,000 to 10,000 parts by weight, of component B; 80 to 5,000 parts by weight, and preferably 300 to 2,000 parts by weight of component C; and optionally, 5 to 1,000 parts by weight, and preferably 10 to 500 parts by weight, of component D.

The resulting unsaturated polyurethane compound has a number-average molecular weight of preferably 1,000 to 50,000, and most preferably 3,000 to 30,000. Too small a number-average molecular weight results in the

cured gel having a small molecular weight between crosslink sites, which may give it insufficient flexibility as a binder polymer. On the other hand, a number-average molecular weight that is too large may cause the viscosity of the electrode composition prior to curing to become so large as to make it difficult to fabricate an electrode having a uniform coat thickness.

The above-mentioned polymeric material having an interpenetrating network structure or semi-interpenetrating network structure (II) may be composed of two or more different compounds capable of forming a mutually interpenetrating or semi-interpenetrating network structure, such as a straight-chain or branched linear polymeric compound and a compound having at least two reactive double bonds on the molecule.

The binder polymer may be composed of compounds capable of forming an interpenetrating network structure or a semi-interpenetrating network structure (semi-IPN structure), i.e., the polymers mentioned above in the description of the polymer gel electrolyte-forming composition.

The above-mentioned type (III) binder polymer is a thermoplastic resin containing units of general formula (8) below.

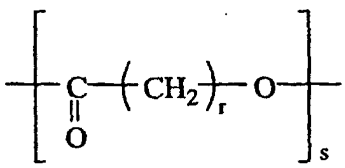

(8)

In the formula, the letter r is from 3 to 5, and the letter s is an integer $\geq 5$.

Such a thermoplastic resin is preferably a thermoplastic polyurethane resin prepared by reacting (E) a polyol compound with (F) a polyisocyanate compound and (G) a chain extender.

Suitable thermoplastic polyurethane resins include not only polyurethane resins having urethane linkages, but also polyurethane-urea resins having both urethane linkages and urea linkages.

Preferred examples of the polyol compound serving as component E include polyester polyols, polyester polyether polyols, polyester polycarbonate polyols, polycaprolactone polyols, and mixtures thereof.

The polyol compound serving as component E has a number-average molecular weight of preferably 1,000 to 5,000, and most preferably 1,500 to 3,000. A polyol compound having too low a number-average molecular weight may lower the physical properties of the resulting thermoplastic polyurethane resin film, such as the heat resistance and tensile elongation. On the other hand, too large a number-average molecular weight may increase the viscosity during synthesis, which may lower the production stability of the thermoplastic polyurethane resin being prepared. The number-average molecular weights used here in connection with polyol compounds are all calculated based on the hydroxyl values measured in accordance with JIS K1577.

Illustrative examples of the polyisocyanate compound serving as above component F include aromatic diisocyanates such as tolylene diisocyanate, 4,4'-diphenylmethane diisocyanate, p-phenylene diisocyanate, 1,5-naphthylene diisocyanate and xylylene diisocyanate; and aliphatic or alicyclic diisocyanates such as hexamethylene diisocyanate, isophorone diisocyanate, 4,4'-dicyclohexylmethane diisocyanate and hydrogenated xylylene diisocyanate.

The chain extender serving as above component G is preferably a low-molecular-weight compound having a molecular weight of not more than 300 and bearing two active hydrogen atoms capable of reacting with isocyanate groups.

Various known compounds may be used as these low-molecular-weight compounds. Illustrative examples include aliphatic diols such as ethylene glycol, propylene glycol and 1,3-propanediol; aromatic or alicyclic diols such as 1,4-bis(β-hydroxyethoxy)benzene, 1,4-cyclohexanediol and bis(β-hydroxyethyl) terephthalate; diamines such as hydrazine, ethylenediamine, hexamethylenediamine and xylylenediamine; and amino alcohols such as adipoyl hydrazide. Any one or combinations of two or more of these may be used.

In preparing the above thermoplastic polyurethane resin, it is advantageous to react the components in the following proportions: 100 parts by weight of the polyol compound serving as component E; 5 to 200 parts by weight, and preferably 20 to 100 parts by weight, of the polyisocyanate compound serving as component F; and 1 to 200 parts by weight, and preferably 5 to 100 parts by weight, of the chain extender serving as component G.

The thermoplastic resin has a swelling ratio, as determined from the formula indicated below, within a range of 150 to 800%, preferably 250 to 500%, and most preferably 250 to 400%.

$$\text{Swelling ratio (\%)} = \frac{\text{weight in grams of swollen thermoplastic resin composition after 24-hour immersion in electrolyte solution at } 20^\circ C}{\text{weight in grams of thermoplastic resin before immersion in electrolyte solution at } 20^\circ C} \times 100$$

Preferred examples of fluoropolymer materials that may be used as the above-mentioned type (IV) binder polymer include polyvinylidene fluoride (PVDF), vinylidene fluoride-hexafluoropropylene copolymer (P(VDF-HFP)) and vinylidene fluoride-chlorotrifluoroethylene copolymer (P(VDF-CTFE)). Of these, fluoropolymer materials having a vinylidene fluoride content of preferably at least 50 wt%, and most preferably at least 70 wt% (with an upper limit of about 97 wt%), are especially preferred.

The weight-average molecular weight of the fluoropolymer, while not subject to any particular limitation, is preferably from 500,000 to 2,000,000, and most preferably from 500,000 to 1,500,000. Too low a weight-average molecular weight may result in an excessive decline in physical strength.

The positive electrode current collector may be made of a suitable material such as stainless steel, aluminum, titanium, tantalum or nickel. Of these, aluminum foil or aluminum oxide foil is especially preferred both in terms of performance and cost. This current collector may be used in any of various forms, including foil, expanded metal, sheet, foam, wool, or a three-dimensional structure such as a net.

The positive electrode active material is selected as appropriate for the intended use of the electrode, the type of battery and other considerations. Examples of positive electrode active materials that are suitable for use in the positive electrode of a lithium secondary cell include group I metal compounds such as CuO, $Cu_2O$, $Ag_2O$, CuS and $CuSO_2$; group IV metal compounds such as TiS, $SiO_2$ and SnO; group V metal compounds such as $V_2O_5$, $V_6O_{13}$, $VO_x$, $Nb_2O_5$, $Bi_2O_3$ and $Sb_2O_3$; group VI metal compounds such as $CrO_3$, $Cr_2O_3$, $MoO_3$, $MoS_2$, $WO_3$ and $SeO_2$; group VII metal compounds such as $MnO_2$ and $Mn_2O_4$; group VIII metal compounds such as $Fe_2O_3$, FeO, $Fe_3O_4$, $Ni_2O_3$, NiO and $CoO_2$; and electrically conductive polymeric compounds such as polypyrrole, polyaniline, poly(p-phenylene), polyacetylene and polyacene.

Positive electrode active materials that may be used in lithium ion secondary cells include chalcogen compounds capable of lithium ion insertion and extraction, and lithium ion-containing chalcogen compounds.

Examples of chalcogen compounds capable of lithium ion insertion and extraction include $FeS_2$, $TiS_2$, $MoS_2$, $V_2O_5$, $V_6O_{13}$ and $MnO_2$.

Specific examples of lithium ion-containing chalcogen compounds include $LiCoO_2$, $LiMnO_2$, $LiMn_2O_4$, $LiMo_2O_4$, $LiV_3O_8$, $LiNiO_2$ and $Li_xNi_yM_{1-y}O_2$ (wherein M is one or more metal element selected from among cobalt, manganese, titanium, chromium, vanadium, aluminum, tin, lead and zinc; $0.05 \le x \le 1.10$; and $0.5 \le y \le 1.0$).

In addition to the binder resin and the positive electrode active material described above, if necessary, the binder composition for the positive electrode may include also an electrically conductive material. Illustrative examples of the conductive material include carbon black, Ketjenblack, acetylene black, carbon whiskers, carbon fibers, natural graphite and artificial graphite.

The positive electrode binder composition typically includes 1,000 to 5,000 parts by weight, and preferably 1,200 to 3,500 parts by weight, of the positive electrode active material and 20 to 500 parts by weight, and preferably 50 to 400 parts by weight, of the conductive material per 100 parts by weight of the binder resin.

The negative electrode is produced by coating one or both sides of a negative electrode current collector with a negative electrode binder composition composed primarily of a binder polymer and a negative electrode active material. The same binder polymer may be used as in the positive electrode. Alternatively, the negative electrode binder composition composed primarily of a binder polymer and a negative electrode active material may be melted and blended, then extruded as a film to form the negative electrode.

The negative electrode current collector may be made of a suitable material such as copper, stainless steel, titanium or nickel. Of these, copper foil or a metal foil whose surface is covered with a copper plating film is especially preferred, both in terms of performance and cost. The current collector used may be in any of various forms, including foil, expanded metal, sheet, foam, wool, or a three-dimensional structure such as a net.

The negative electrode active material is selected as appropriate for the intended use of the electrode, the type of battery and other considerations. Examples of negative electrode active materials that are suitable for use in the negative electrode of a lithium secondary cell include alkali metals, alkali metal alloys, carbonaceous materials, and the same materials as those mentioned above for the positive electrode active material.

Examples of suitable alkali metals include lithium, sodium and potassium. Examples of suitable alkali metal alloys include metallic lithium, Li-Al, Li-Mg, Li-Al-Ni, sodium, Na-Hg and Na-Zn.

Examples of suitable carbonaceous materials include graphite, carbon black, coke, glassy carbon, carbon fibers, and sintered bodies obtained from any of these.

In a lithium ion secondary cell, use may be made of a material capable of the reversible insertion and extraction

lithium ions. The material capable of the reversible insertion and extraction of lithium ions may be a carbonaceous material such as a non-graphitizable carbonaceous material or a graphite material. Specific examples of carbonaceous materials that may be used include pyrolytic carbon, cokes (e.g., pitch coke, needle coke, petroleum coke), graphites, glassy carbons, fired organic polymeric materials (materials such as phenolic resins or furan resins that have been carbonized by firing at a suitable temperature), carbon fibers, and activated carbon. Use can also be made of other materials capable of the reversible insertion and extraction of lithium ions, including polymers such as polyacetylene and polypyrrole, and oxides such as $SnO_2$.

In addition to the binder resin and the negative electrode active material, if necessary, the binder composition for the negative electrode may include also a conductive material. Illustrative examples of the conductive material include the same as those mentioned above for the positive electrode binder.

The negative electrode binder composition typically includes 500 to 1,700 parts by weight, and preferably 700 to 1,300 parts by weight, of the negative electrode active material and 0 to 70 parts by weight, and preferably 0 to 40 parts by weight, of the conductive material per 100 parts by weight of the binder resin.

The above-described negative electrode binder composition and positive electrode binder composition are generally used together with a dispersing medium, in the form of a paste. Suitable dispersing media include polar solvents such as N-methyl-2-pyrrolidone (NMP), dimethylformamide, dimethylacetamide and dimethylsulfonamide. The dispersing medium is typically added in an amount of about 30 to 300 parts by weight per 100 parts by weight of the positive electrode or negative electrode binder composition.

No particular limitation is imposed on the method for shaping the positive electrode and the negative electrode as thin films, although it is preferable in each case to apply the composition by a suitable means such as roller coating with an applicator roll, screen coating, doctor blade coating, spin coating or bar coating so as to form an active material layer having a uniform thickness when dry of 10 to 200 μm, and especially 50 to 150 μm.

The separator disposed between the resulting positive and negative electrodes is preferably (1) a separator prepared by impregnating a separator base with the above-described nonaqueous electrolyte solution, or (2) a separator prepared by impregnating the separator base with the above-described polymer gel electrolyte-forming composition then carrying out a reaction to effect curing.

The separator base may be one that is commonly used in secondary cells. Illustrative examples include polyethylene nonwoven fabric, polypropylene nonwoven fabric, polyester nonwoven fabric, polytetrafluoroethylene porous film, kraft paper, sheet laid from a blend of rayon fibers and sisal hemp fibers, manila hemp sheet, glass fiber sheet, cellulose-based electrolytic paper, paper made from rayon fibers, paper made from a blend of cellulose and glass fibers, and combinations thereof in the form of multilayer sheets.

The secondary cell according to the invention is a secondary cell composed of a positive electrode, a negative electrode and a nonaqueous electrolyte solution that includes at least one compound selected from Compound Group (A), and is either a lithium ion secondary cell in which the electrolyte is a liquid or a lithium ion gel secondary cell which uses a polymer gel electrolyte containing a compound having at least two reactive double bonds on the molecule and, optionally, a linear polymer compound.

Here, the same resins as were described above can be suitably used as the binder resin making up the positive electrode and the negative electrode. In lithium ion gel secondary cells in particular, the internal resistance can lowered by using as the binder resin the same polymer material that serves as the matrix polymer in the polymer gel electrolyte.

The secondary cell of the invention can be assembled by stacking, fan-folding or winding a cell assembly composed of the above-described positive electrode and negative electrode with a separator therebetween. The cell assembly is then formed into a laminate or a coin-like shape, and placed within a cell housing such as a can or a laminate pack. The housing is then mechanically sealed if it is a can or heat-sealed if it is a laminate pack. In cases where the separator used is one obtained by impregnating a separator base with the polymer gel electrolyte-forming composition of the invention, the separator base is positioned between the positive electrode and the negative electrode and the resulting cell assembly is placed in a cell housing. The cell assembly is then filled with the polymer gel electrolyte-forming composition so that the composition thoroughly penetrates between the electrodes and into gaps between the separator and the electrodes, following which the composition is reacted to effect curing.

The resulting secondary cell of the invention can be operated at a high capacity and a high current without compromising its outstanding characteristics, including an excellent charge/discharge efficiency, high energy density, high output density and long cycle life. Such cells have a broad operating temperature range, and can be effectively used as lithium secondary cells and lithium ion secondary cells.

The secondary cells of the invention are well-suited for use in a variety of applications, including main power supplies and memory backup power supplies for portable electronic equipment such as video cameras, notebook computers, cell phones and "personal handyphone systems" (PHS), uninterruptible power supplies for equipment such as personal computers, in electric cars and hybrid cars, and together with solar cells as energy storage systems for solar power generation.

Electrical Double-Layer Capacitor of the Invention

The electrical double-layer capacitor of the invention includes a pair of polarizable electrodes, a separator between the polarizable electrodes and an electrolyte solution, and is characterized by the use of the above-described nonaqueous electrolyte solution as the electrolyte solution.

The polarizable electrodes may be ones produced by coating a current collector with a polarizable electrode composition containing a carbonaceous material and a binder resin.

The binder resin used for this purpose can be the same as the resin described above with reference to secondary cells.

The carbonaceous material is not subject to any particular limitation. Illustrative examples include carbonaceous materials prepared by the carbonization of a suitable starting material, or by both carbonization and subsequent activation of the carbonized material to yield activated carbon. Examples of suitable starting materials include plant-based materials such as wood, sawdust, coconut shells and pulp spent liquor; fossil fuel-based materials such as coal and petroleum fuel oil, as well as fibers spun from coal or petroleum pitch obtained by the thermal cracking of such fossil fuel-based materials or from tar pitch; and synthetic polymers, phenolic resins, furan resins, polyvinyl chloride resins, polyvinylidene chloride resins, polyimide resins, polyamide resins, liquid-crystal polymers, plastic waste and/or reclaimed tire rubber. Activated carbons prepared by chemical activation using potassium hydroxide are especially preferred because they tend to provide a larger capacitance than steam-activated product.

The activated carbon used in the practice of the invention may be in any of various forms, including shredded material, granulated material, pellets, fibers, felt, woven fabric or sheet.

The amount of activated carbon included is 500 to 10,000 parts by weight, and preferably 1,000 to 4,000 parts by weight, per 100 parts by weight of the binder resin. The addition of too much activated carbon may lower the bonding strength of the binder composition for the polarizable electrodes, resulting in poor adhesion to the current collector. On the other hand, too little activated carbon may have the effect of increasing the electrical resistance and lowering the electrostatic capacitance of the polarizable electrodes produced with the composition.

A conductive material may be added to the above-described carbonaceous material. The conductive material may be any suitable material capable of providing electrical conductivity to the carbonaceous material. Illustrative, non-limiting, examples include carbon black, Ketjenblack, acetylene black, carbon whiskers, carbon fibers, natural graphite, artificial graphite, titanium oxide, ruthenium oxide, and metallic fibers such as those made of aluminum and nickel. Any one or combinations of two or more thereof may be used. Of these, Ketjenblack and acetylene black, which are both types of carbon black, are preferred.

The average particle size of the conductive material, though not subject to any particular limitation, is preferably 10 nm to 10 μm, more preferably 10 to 100 nm, and even more preferably 20 to 40 nm. It is especially advantageous for the conductive material to have an average particle size which is from 1/5000 to 1/2, and preferably from 1/1000 to 1/10, the average particle size of the carbonaceous material.

The amount of conductive material added is not subject to any particular limitation, although an amount of from 0.1 to 20 parts by weight, and preferably 0.5 to 10 parts by weight, per 100 parts by weight of the carbonaceous material is desirable for achieving a good capacitance and imparting electrical conductivity.

The binder composition for polarizable electrodes is generally used together with a diluting solvent, in the form of a paste. Suitable diluting solvents include N-methyl-2-pyrrolidone, acetonitrile, tetrahydrofuran, acetone, methyl ethyl ketone, 1,4-dioxane and ethylene glycol dimethyl ether. The diluting solvent is typically added in an amount of about 30 to 300 parts by weight per 100 parts by weight of the polarizable electrode binder composition.

The above-described polarizable electrode composition is coated onto a current conductor to form the polarizable electrodes. Any positive and negative electrode current collectors commonly used in electrical double-layer capacitors may be selected and used for this purpose. The positive and negative electrode current collectors are preferably aluminum oxide foil. In capacitors which use lithium salts or the like, the positive electrode current collector is preferably aluminum foil or aluminum oxide and the negative electrode current collector is preferably aluminum foil, aluminum oxide foil, copper foil, nickel foil, or a metal foil covered on the surface with a copper plating film.

The foils making up the respective current collectors may be in any of various shapes, including thin foils, flat sheets, and perforated, stampable sheets. The foil has a thickness of generally about 1 to 200 μm. Taking into account such characteristics as the density of the carbonaceous material as a portion of the overall electrode and the electrode strength, a thickness of 8 to 100 μm, and especially 8 to 40 μm, is preferred.

Alternatively, the polarizable electrodes can be produced by melting and blending the polarizable electrode composition, then extruding the blend as a film.

No particular limitation is imposed on the method for shaping the polarizable electrodes as thin films, although it is preferable to apply the composition by a suitable means such as roller coating with an applicator roll, screen coating, doctor blade coating, spin coating or bar coating so as to form an activated carbon layer having a uniform thickness when dry of 10 to 500 μm, and especially 50 to 400 μm.

The separator disposed between the pair of polarizable electrodes is (1) a separator prepared by impregnating a separator base with the above-described nonaqueous electrolyte solution, or (2) a separator prepared by impregnating the separator base with the above-described polymer gel electrolyte-forming composition then carrying out a reaction to effect curing.

The separator base may be one that is commonly used in electrical double-layer capacitors. Illustrative examples include polyethylene nonwoven fabric, polypropylene nonwoven fabric, polyester nonwoven fabric, polytetrafluoroethylene porous film, kraft paper, sheet laid from a blend of rayon fibers and sisal hemp fibers, manila hemp sheet, glass fiber sheet, cellulose-based electrolytic paper, paper made from rayon fibers, paper made from a blend of cellulose and glass fibers, and combinations thereof in the form of multilayer sheets.

The electrical double-layer capacitor according to the invention is an electrical double-layer capacitor composed of a pair of polarizable electrodes and a nonaqueous electrolyte solution that includes at least one compound selected from Compound Group (A), and is either an electrical double-layer capacitor in which the electrolyte is a liquid or an electrical double-layer capacitor which uses a polymer gel electrolyte containing a compound having at least two reactive double bonds on the molecule and, optionally, a linear polymer compound.

Here, the same resin as that described above may be suitably used as the binder resin making up the polarizable electrodes. In electrical double-layer capacitors in particular, the internal resistance of the capacitor can be lowered by using as the binder resin the same polymer material that serves as the matrix polymer in the polymer gel electrolyte.

The electrical double-layer capacitor of the invention can be assembled by stacking, fan-folding or winding an electrical double-layer capacitor assembly composed of the above-described pair of polarizable electrodes with a separator therebetween. The capacitor assembly is then formed into a laminate or a coin-like shape, and placed within a capacitor housing such as a can or a laminate pack. The housing is then mechanically sealed if it is a can or heat-sealed if it is a laminate pack. In cases where the separator used is (1) or (2) above, the separator base is positioned between the pair of polarizable electrodes and the resulting assembly is placed in a capacitor housing. The capacitor assembly is then filled with the nonaqueous electrolyte or the polymer gel electrolyte-forming composition so that the composition thoroughly penetrates between the electrodes and into gaps between the separator and the electrodes. In cases where a polymer gel electrolyte-forming composition is used, after it has been allowed to penetrate thoroughly, it is reacted to effect curing.

The resulting electrical double-layer capacitor of the invention has an outstanding performance, including a high output voltage, a large output current and a broad service temperature range, without compromising such desirable characteristics as an excellent charge/discharge efficiency, a high energy density, a high output density and a long life.

The inventive electrical double-layer capacitors are thus highly suitable for use in a broad range of applications, including memory backup power supplies for electronic equipment such as personal computers and wireless terminals, uninterruptible power supplies for personal computers, in transport equipment such as electric cars and hybrid cars, together with solar cells as energy storage systems for solar power generation, and in combination with batteries as load-leveling power supplies.

## EXAMPLE

The following synthesis examples, examples of the invention and comparative examples are provided to illustrate the invention and do not in any way limit the invention.

### Synthesis Example 1

Synthesis of Polyvinyl Alcohol Derivative

A reaction vessel equipped with a stirring element was charged with 10 parts by weight of polyvinyl alcohol (average degree of polymerization, 100; vinyl alcohol fraction, ≥98%) and 70 parts by weight of acetone. A solution of 1.81 parts by weight of sodium hydroxide in 2.5 parts by weight of water was gradually added under stirring, after which stirring was continued for one hour at room temperature.

To this solution was gradually added, over a period of 3 hours, a solution of 67 parts by weight of glycidol in 100 parts by weight of acetone. The resulting mixture was stirred for 8 hours at 50°C to effect the reaction. Following reaction completion, stirring was stopped, whereupon the polymer precipitated from the mixture. The precipitate was collected, dissolved in 400 parts by weight of water, and neutralized with acetic acid. The neutralized polymer was purified by dialysis, and the resulting solution was freeze-dried, giving 22.50 parts by weight of dihydroxypropylated polyvinyl alcohol.

Three parts by weight of the resulting polyvinyl alcohol polymer was mixed with 20 parts by weight of dioxane and 14 parts by weight of acrylonitrile. To this mixed solution was added a solution of 0.16 part by weight of sodium

hydroxide in 1 part by weight of water, and stirring was carried out for 10 hours at 25°C.

The resulting mixture was neutralized using an ion-exchange resin (produced by Organo Corporation under the trade name Amberlite IRC-76). The ion-exchange resin was then separated off by filtration, after which 50 parts by weight of acetone was added to the solution and the insolubles were filtered off. The resulting acetone solution was placed in dialysis membrane tubing and dialyzed with running water. The polymer which precipitated within the dialysis membrane tubing was collected and re-dissolved in acetone. The resulting solution was filtered, following which the acetone was evaporated off, giving a cyanoethylated polyvinyl alcohol polymer derivative.

The infrared absorption spectrum of this polymer derivative showed no hydroxyl group absorption, confirming that all the hydroxyl groups were capped with cyanoethyl groups (capping ratio, 100%).

Synthesis Example 2

Synthesis of Thermoplastic Polyurethane Resin

A reactor equipped with a stirrer, a thermometer and a condenser was charged with 64.34 parts by weight of preheated and dehydrated polycaprolactone diol (Praccel 220N, made by Daicel Chemical Industries, Ltd.) and 28.57 parts by weight of 4,4'-diphenylmethane diisocyanate. The reactor contents were stirred and mixed for 2 hours at 120°C under a stream of nitrogen, following which 7.09 parts by weight of 1,4-butanediol was added to the mixture and the reaction was similarly effected at 120°C under a stream of nitrogen. When the reaction reached the point where the reaction product became rubbery, it was stopped. The reaction product was then removed from the reactor and heated at 100°C for 12 hours. Once the isocyanate group absorption peak was confirmed to have disappeared from the infrared absorption spectrum, heating was stopped, yielding a solid polyurethane resin.

The resulting polyurethane resin had a weight-average molecular weight (Mw) of $1.71 \times 10^5$. A polyurethane resin solution was prepared by dissolving 8 parts by weight of this polyurethane resin in 92 parts by weight of N-methyl-2-pyrrolidone.

Example 1

Measurement of Reduction Potential

Preparation of Nonaqueous Electrolyte Solution

An organic electrolyte was prepared by mixing propylene carbonate (PC), ethylene carbonate (EC) and diethyl carbonate (DEC) in a weight ratio of 10:35:55, following which one part by weight of vinylene carbonate was added. $LiPF_6$ was dissolved in the resulting mixture to a concentration of 1 M, thereby forming a nonaqueous electrolyte solution.

Preparation of Polymer Gel Electrolyte-Forming Composition

The following dehydration-treated components were mixed in the indicated amounts: 100 parts by weight of polyethylene glycol dimethacrylate (number of oxirene units, 9), 70.15 parts by weight of methoxypolyethylene glycol monomethacrylate (number of oxirene units, 2), and 8.41 parts by weight of trimethylolpropane trimethacrylate. Next, 0.5 part by weight of the polyvinyl alcohol derivative obtained in Synthesis Example 1 was added to 100 parts by weight of the above mixture, yielding a pregel composition.

Seven parts by weight of the resulting pregel composition, 93 parts by weight of the above-described nonaqueous electrolyte solution, and 0.05 part by weight of azobisisobutyronitrile were added together to give a polymer gel electrolyte-forming composition.

Measurement of Potential

The reduction potential was measured by cyclic voltammetry at a sweep rate of 10 mV/s using the above polymer gel electrolyte-forming composition as the electrolyte, using platinum as the working electrode and the counter electrode, and using metallic lithium as the reference electrode. As a result of measurement by cyclic voltammetry, a reduction current was observed at a potential versus $Li/Li^+$ of +1.3 V.

Example 2

Lithium Ion Secondary Cell

Preparation of Nonaqueous Electrolyte Solution

A mixture of propylene carbonate (PC), ethylene carbonate (EC) and diethyl carbonate (DEC) was prepared in a weight ratio of 10:35:55, following which 1 part by weight of tetrahydrofurfuryl methacrylate was added. $LiPF_6$ was dissolved in the resulting mixture to a concentration of 1 M, thereby forming a nonaqueous electrolyte solution.

Fabrication of Positive Electrode

A paste-like positive electrode binder composition was prepared by stirring and mixing together 92 parts by weight of $LiCoO_2$ as the positive electrode active material, 4 parts by weight of Ketjenblack as the conductive material, 2.5 parts by weight of the polyurethane resin solution obtained in Synthesis Example 2, 38 parts by weight of a solution of 10 parts by weight of polyvinylidene fluoride (PVDF) in 90 parts by weight of N-methyl-2-pyrrolidone, and 18 parts by weight of N-methyl-2-pyrrolidone. The positive electrode binder composition was applied onto aluminum foil with a doctor blade to a dry film thickness of 100 μm. This was followed by 2 hours of drying at 80°C, then roll pressing to a thickness of 80 μm, thereby giving a positive electrode. The terminal lead attachment portion of the electrode was left uncoated with the positive electrode composition.

Fabrication of Negative Electrode

A paste-like negative electrode binder composition was prepared by stirring and mixing together 92 parts by weight of mesophase microbeads (MCMB6-28, made by Osaka Gas Chemicals Co., Ltd.) as the negative electrode active material, 80 parts by weight of a solution of 10 parts by weight of polyvinylidene fluoride in 90 parts by weight of N-methyl-2-pyrrolidone, and 40 parts by weight of N-methyl-2-pyrrolidone. The negative electrode binder composition was applied onto copper foil with a doctor blade to a dry film thickness of 100 μm. This was followed by 2 hours of drying at 80°C, then roll pressing to a thickness of 80 μm, thereby giving a negative electrode. The terminal lead attachment portion of the electrode was left uncoated with the negative electrode composition.

Fabrication of Cell

At the lead attachment portions of the positive and negative electrode current collectors fabricated as described above, an aluminum terminal lead was attached to the positive electrode and a nickel terminal lead was attached to the negative electrode. The positive and negative electrodes were then vacuum dried at 140°C for 12 hours. A polyolefin nonwoven fabric separator was placed between the dried positive and negative electrodes, and the resulting laminate was coiled to form a flattened electrode body. The electrode body was placed in an aluminum laminate case with the positive electrode and negative electrode terminal leads emerging respectively from the positive and negative electrodes, and the terminal areas were heat-sealed, thereby forming a cell assembly. This cell assembly was heated to and held at 80°C. The nonaqueous electrolyte solution prepared as described above was poured into the cell assembly being held at 80°C and impregnated under a vacuum, following which the aluminum laminate case was heat-sealed, giving the laminated nonaqueous secondary cell having a design capacity of 300 mAh shown in FIG. 1. The drawing in FIG. 1 shows a positive electrode current collector 1, a negative electrode current collector 2, a positive electrode 3, a negative electrode 4, a separator 5, tabs 6 and a laminate case 7.

Example 3

Lithium Ion Gel Secondary Cell

Preparation of Nonaqueous Electrolyte Solution

An organic electrolyte was prepared by mixing propylene carbonate (PC), ethylene carbonate (EC) and diethyl carbonate (DEC) in a weight ratio of 10:35:55, following which one part by weight of tetrahydrofurfuryl methacrylate was added. $LiPF_6$ was dissolved in the resulting mixture to a concentration of 1 M, thereby forming a nonaqueous electrolyte solution.

Preparation of Polymer Gel Electrolyte-Forming Composition

The following dehydration-treated components were mixed in the indicated amounts: 100 parts by weight of polyethylene glycol dimethacrylate (number of oxirene units, 9), 70.15 parts by weight of methoxypolyethylene glycol monomethacrylate (number of oxirene units, 2), and 8.41 parts by weight of trimethylolpropane trimethacrylate. Next, 0.5 part by weight of the polyvinyl alcohol derivative obtained in Synthesis Example 1 was added to 100 parts by weight of the above mixture, yielding a pregel composition.

Seven parts by weight of the resulting pregel composition, 93 parts by weight of the above-described nonaqueous electrolyte solution, and 0.05 part by weight of azobisisobutyronitrile were added together to give a polymer gel electrolyte-forming composition.

Fabrication of Positive Electrode

A paste-like positive electrode binder composition was prepared by stirring and mixing together 92 parts by weight of $LiCoO_2$ as the positive electrode active material, 4 parts by weight of Ketjenblack as the conductive material, 2.5 parts by weight of the polyurethane resin solution obtained in Synthesis Example 2, 38 parts by weight of a solution of 10 parts by weight of polyvinylidene fluoride (PVDF) in 90 parts by weight of N-methyl-2-pyrrolidone, and 18 parts by weight of N-methyl-2-pyrrolidone. The positive electrode binder composition was applied onto aluminum foil with a doctor blade to a dry film thickness of 100 μm. This was followed by 2 hours of drying at 80°C, then roll pressing to a thickness of 80 μm, thereby giving a positive electrode. The terminal lead attachment portion of the electrode was left uncoated with the positive electrode composition.

Fabrication of Negative Electrode

A paste-like negative electrode binder composition was prepared by stirring and mixing together 92 parts by weight of mesophase microbeads (MCMB6-28, made by Osaka Gas Chemicals Co., Ltd.) as the negative electrode active material, 80 parts by weight of a solution of 10 parts by weight of polyvinylidene fluoride in 90 parts by weight of N-methyl-2-pyrrolidone, and 40 parts by weight of N-methyl-2-pyrrolidone. The negative electrode binder composition was applied onto copper foil with a doctor blade to a dry film thickness of 100 μm. This was followed by 2 hours of drying at 80°C, then roll pressing to a thickness of 80 μm, thereby giving a negative electrode. The terminal lead attachment portion of the electrode was left uncoated with the negative electrode composition.

Fabrication of Cell

At the lead attachment portions of the positive and negative electrode current collectors fabricated as described above, an aluminum terminal lead was attached to the positive electrode and a nickel terminal lead was attached to the negative electrode. The positive and negative electrodes were then vacuum dried at 140°C for 12 hours. A polyolefin nonwoven fabric separator was placed between the dried positive and negative electrodes, and the resulting laminate was coiled to form a flattened electrode body. The electrode body was placed in an aluminum laminate case with the positive electrode and negative electrode terminal leads emerging respectively from the positive and negative electrodes, and the terminal areas were heat-sealed, thereby forming a cell assembly. This cell assembly was heated to and held at 80°C. The polymer gel electrolyte-forming composition prepared as described above was poured into the cell assembly being held at 80°C and impregnated under a vacuum, following which the aluminum laminate case was heat-sealed. This was followed by 2 hours of heating at 55°C, then 0.5 hour of heating at 80°C to effect gelation of the polymer gel electrolyte-forming composition, thereby giving the laminated nonaqueous secondary cell having a design capacity of 300 mAh shown in FIG. 1. The drawing in FIG. 1 shows a positive electrode current collector 1, a negative electrode current collector 2, a positive electrode 3, a negative electrode 4, a separator 5, tabs 6 and a laminate case 7.

Examples 4 to 11

Aside from using, respectively, propanesultone (Example 4), N-methylmaleimide (Example 5), maleic anhydride (Example 6), vinyloxazoline (Example 7), N-vinylpyrrolidone (Example 8), vinylene carbonate (Example 9), fluoroethylene carbonate (Example 10) and ethylene sulfide (Example 11) instead of tetrahydrofurfuryl methacrylate, nonaqueous electrolyte solutions and polymer gel electrolyte-forming compositions were prepared in the same way as in Example 3. The resulting polymer gel electrolyte-forming compositions were used to fabricate secondary cells in the same way as in Example 2.

Example 12

Aside from using 0.5 part by weight of tetrahydrofurfuryl methacrylate and 0.5 part by weight of propanesultone instead of 1 part by weight of tetrahydrofurfuryl methacrylate, a nonaqueous electrolyte solution and a polymer gel electrolyte-forming composition were prepared in the same way as in Example 2. The resulting polymer gel electrolyte-forming composition was used to fabricate a secondary cell in the same way as in Example 3.

Example 13

Aside from using 0.5 part by weight of tetrahydrofurfuryl methacrylate and 0.5 part by weight of vinylene carbonate instead of 1 part by weight of tetrahydrofurfuryl methacrylate, a nonaqueous electrolyte solution and a polymer gel electrolyte-forming composition were prepared in the same way as in Example 2. The resulting polymer gel electrolyte-forming composition was used to fabricate a secondary cell in the same way as in Example 3.

Example 14

Aside from using the following positive electrode, a secondary cell was fabricated in the same way as in Example 3.

Fabrication of Positive Electrode

A paste-like positive electrode binder composition was prepared by stirring and mixing together 92 parts by weight of $LiCoO_2$ as the positive electrode active material, 4 parts by weight of Ketjenblack as the conductive material, 40 parts by weight of a solution of 10 parts by weight of polyvinylidene fluoride in 90 parts by weight of N-methyl-2-pyrrolidone, and 18 parts by weight of N-methyl-2-pyrrolidone. The positive electrode binder composition was applied onto aluminum foil with a doctor blade to a dry film thickness of 100 μm. This was followed by 2 hours of drying at 80°C, then roll pressing to a thickness of 80 μm, thereby giving a positive electrode. The terminal lead attachment portion of the electrode was left uncoated with the positive electrode composition.

Comparative Example 1

Aside from not using tetrahydrofurfuryl methacrylate, a nonaqueous electrolyte solution and a polymer gel electrolyte-forming composition were prepared in the same way as in Example 2. The resulting polymer gel electrolyte-forming composition was used to fabricate a secondary cell in the same way as in Example 3.

Comparative Example 2

Aside from not using tetrahydrofurfuryl methacrylate, a nonaqueous electrolyte solution was prepared in the same way as in Example 1. The resulting nonaqueous electrolyte solution was used to fabricate a secondary cell in the same way as in Example 1.

The following tests were carried out on the laminate-type secondary cells obtained in each of the above examples of the invention and comparative examples. The test results are given in Table 1.

[1] Low-Temperature Characteristic Test:

The secondary cells were subjected to a test in which the upper limit voltage during charging was set at 4.2 V and constant current, constant-voltage charging was carried out at a current of 150 mA. The secondary cells were also subjected to a test conducted at room temperature (25°C) or -20°C in which the cutoff voltage during discharging was set to 3 V and constant-current discharging was carried out at a current of 150 mA. Using the results thus obtained, the ratio of the discharge capacity at -20°C to the discharge capacity at 25°C was calculated as shown below, giving the low-temperature characteristic.

$$\text{Low-Temperature Characteristic (\%)} = [(\text{discharge capacity at -20°C})/(\text{discharge capacity at 25°C})] \times 100$$

[2] Cycle Characteristic Test

The secondary cells were subjected to a 100 charge/discharge cycle test, each cycle consisting of charging to an upper limit voltage of 4.2 V at a current of 150 mA, then constant-current charging at a current of 150 mA to a cutoff voltage during discharging of 3 V. Using the results thus obtained, the ratio of the cell capacity in the 100$^{th}$ cycle to the cell capacity in the first cycle was calculated as shown below, giving the cycle maintenance ratio.

$$\text{Cycle Maintenance Ratio (\%)} = [(\text{discharge capacity in } 100^{th} \text{ cycle}) / (\text{discharge capacity in first cycle})] \times 100$$

Table 1

| | | Nonaqueous solvent (parts by weight) | | | Compound Group (A) | | | Low-temperature character-istic (%) | Cycle maintenance ratio (%) |
|---|---|---|---|---|---|---|---|---|---|
| | | PC | EC | DEC | Substance | Amount (pbw) | Proportion of electrolyte (%) | | |
| Example | 2 | 10 | 35 | 55 | Tetrahydrofurfuryl methacrylate | 1 | 0.82 | 80 | 90 |
| | 3 | 10 | 35 | 55 | Tetrahydrofurfuryl methacrylate | 1 | 0.82 | 60 | 85 |
| | 4 | 10 | 35 | 55 | Propanesultone | 1 | 0.82 | 55 | 83 |
| | 5 | 10 | 35 | 55 | N-methylmaleimide | 1 | 0.82 | 50 | 82 |
| | 6 | 10 | 35 | 55 | Maleic anhydride | 1 | 0.82 | 57 | 87 |
| | 7 | 10 | 35 | 55 | Vinyl oxide | 1 | 0.82 | 53 | 84 |
| | 8 | 10 | 35 | 55 | N-Vinylpyrrolidone | 1 | 0.82 | 60 | 85 |
| | 9 | 10 | 35 | 55 | Vinylene carbonate | 1 | 0.82 | 58 | 89 |
| | 10 | 10 | 35 | 55 | Fluoroethylene carbonate | 1 | 0.82 | 56 | 84 |
| | 11 | 10 | 35 | 55 | Ethylene sulfite | 1 | 0.82 | 55 | 85 |
| | 12 | 10 | 35 | 55 | Tetrahydrofurfuryl methacrylate<br>Propanesultone | 0.5<br>0.5 | 0.82 | 64 | 88 |
| | 13 | 10 | 35 | 55 | Tetrahydrofurfuryl methacrylate<br>Vinylene carbonate | 0.5<br>0.5 | 0.82 | 62 | 87 |
| | 14 | 10 | 35 | 55 | Tetrahydrofurfuryl methacrylate | 1 | 0.82 | 52 | 85 |
| Comparative Example | 1 | 10 | 35 | 55 | not added | 0 | 0 | 43 | 34 |
| | 2 | 10 | 35 | 55 | not added | 0 | 0 | 58 | 56 |

The nonaqueous electrolyte solutions of the invention include (A) at least one compound selected from a specific Compound Group (A), (B) an ion-conductive salt and (C) an organic electrolyte, and have a content of compounds selected from Compound Group (A) of 0.01 to 7 wt%. As a result, they improve the cycle characteristics and electrical capacity of cells and capacitors, and also provide an excellent low-temperature characteristic. Such nonaqueous electrolyte solutions are well-suited for use in secondary cells and electrical double-layer capacitors.

## Claims

1. A nonaqueous electrolyte solution **characterized by** including a compound which reductively decomposes on a

potential at least 1.0 V higher than the equilibrium potential of metallic lithium and lithium ions (a potential versus $Li/Li^+$ of +1.0 V or more).

2. The nonaqueous electrolyte solution of claim 1 which is **characterized by** including (A) 0.01 to 7 wt% of at least one compound selected from Compound Group (A) below as the compound which reductively decomposes on a potential at least 1.0 V higher than the equilibrium potential of metallic lithium and lithium ions, (B) an ion-conductive salt, and (C) an organic electrolyte.
(A) maleic anhydride and derivatives thereof (A1)
N-methylmaleimide and derivatives thereof (A2)
N-vinylpyrrolidone and derivatives thereof (A3)
tetrahydrofurfuryl (meth)acrylate and derivatives thereof (A4)
vinyloxazoline and derivatives thereof (A5)
propanesultone, butanesultone and derivatives thereof (A6)
vinylene carbonate and derivatives thereof (A7)
N-vinylcaprolactam and derivatives thereof (A8)
2-vinyl-1,3-dioxolane and derivatives thereof (A9)
vinylethylene carbonate and derivatives thereof (A10)
butadienesulfone (A11)
fluoroethylene carbonate (A12)
ethylene sulfite and derivatives thereof (A13)

3. The nonaqueous electrolyte solution of claim 1 or 2 which is **characterized in that** the organic electrolyte (C) includes propylene carbonate.

4. The nonaqueous electrolyte solution of claim 3 which is **characterized by** having a propylene carbonate content of 1 to 20 wt%.

5. A polymer gel electrolyte-forming composition which is **characterized by** including a nonaqueous electrolyte solution of any one of claims 1 to 4 and a compound having at least two reactive double bonds on the molecule (exclusive of the compounds in Compound Group (A)).

6. The polymer gel electrolyte-forming composition of claim 5 which is **characterized by** containing a straight-chain or branched linear polymeric compound.

7. A polymer gel electrolyte which is **characterized in that** it can be obtained by gelating the polymer gel electrolyte-forming composition of claim 5 or 6.

8. A secondary cell having a positive electrode and a negative electrode, a separator between the positive and negative electrodes, and an electrolyte solution, which secondary cell is **characterized in that** the electrolyte solution is the nonaqueous electrolyte solution of any one of claims 1 to 4.

9. A secondary cell having a positive electrode, a negative electrode and an electrolyte, which secondary cell is **characterized in that** the electrolyte is the polymer gel electrolyte of claim 7.

10. The secondary cell of claim 8 or 9 which is **characterized in that** the positive electrode includes a current collector made of aluminum foil or aluminum oxide foil, and the negative electrode includes a current collector made of aluminum foil, aluminum oxide foil, copper foil, or metal foil having a surface covered with a copper plating film.

11. An electrical double-layer capacitor having a pair of polarizable electrodes, a separator between the polarizable electrodes and an electrolyte solution, which electrical double-layer capacitor is **characterized in that** the electrolyte solution is the nonaqueous electrolyte solution of any one of claims 1 to 4.

12. An electrical double-layer capacitor having an electrolyte between a pair of polarizable electrodes, which electrical double-layer capacitor is **characterized in that** the electrolyte is the polymer gel electrolyte of claim 7.

13. The electrical double-layer capacitor of claim 11 or 12 which is **characterized in that** the pair of polarizable electrodes includes a positive electrode current collector made of aluminum foil or aluminum oxide foil, and a negative

electrode current collector made of aluminum foil, aluminum oxide foil, copper foil, or metal foil having a surface covered with a copper plating film.

FIG.1

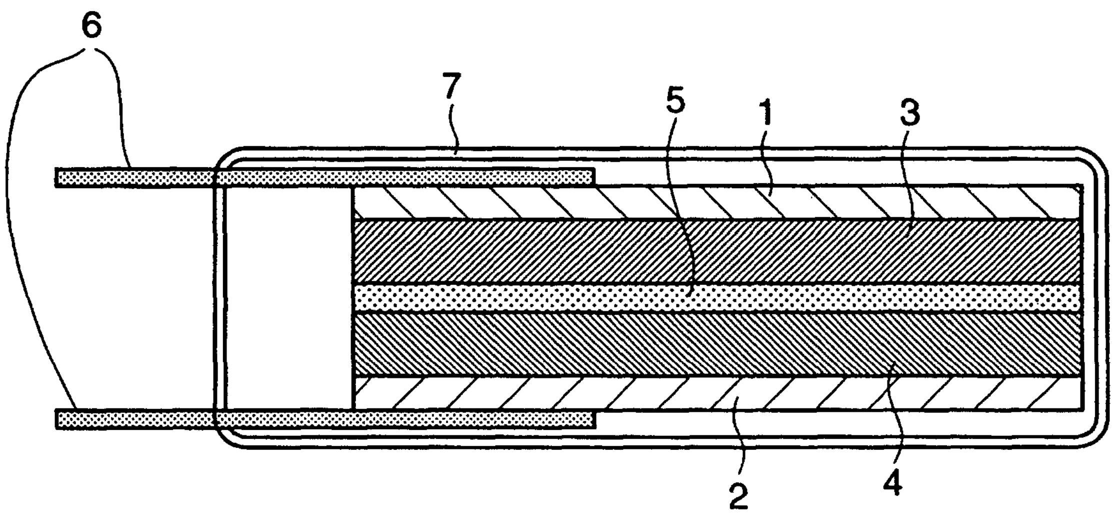

## INTERNATIONAL SEARCH REPORT

International application No.
PCT/JP02/03937

A. CLASSIFICATION OF SUBJECT MATTER
Int.Cl$^7$ H01M10/40, H01G9/038, H01G9/04

According to International Patent Classification (IPC) or to both national classification and IPC

B. FIELDS SEARCHED

Minimum documentation searched (classification system followed by classification symbols)
Int.Cl$^7$ H01M10/40, H01G9/038, H01G9/04

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | EP 693537 A1 (SAFT), 22 November, 1995 (22.11.95), Revendications 1-7 & JP 8-45545 A & US 5626981 A & CA 2147549 A | 1 |
| X | JP 2000-294272 A (Mitsui Chemicals, Ltd.), 20 October, 2000 (20.10.00), Claims 1 to 12; Par. Nos. [0018], [0024]; examples (Family: none) | 1 |
| X | JP 2000-149989 A (NEC Mobile Energy Corp.), 30 May, 2000 (30.05.00), Claims 1 to 5; Par. No. [0016]; examples & US 6291107 A & KR 2000017619 A | 1 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>15 July, 2002 (15.07.02) | Date of mailing of the international search report<br>30 July, 2002 (30.07.02) |
| Name and mailing address of the ISA/<br>Japanese Patent Office<br>Facsimile No. | Authorized officer<br><br>Telephone No. |

Form PCT/ISA/210 (second sheet) (July 1998)

**INTERNATIONAL SEARCH REPORT**

International application No.
PCT/JP02/03937

C (Continuation). DOCUMENTS CONSIDERED TO BE RELEVANT

| Category* | Citation of document, with indication, where appropriate, of the relevant passages | Relevant to claim No. |
|---|---|---|
| X | JP 2001-43895 A (Ube Industries, Ltd.), 16 February, 2001 (16.02.01), Claims 1 to 22 (particularly, 1, 2, 8, 9); Par. Nos. [0008], [0020]; examples & CN 1277468 A | 1 |
| X | EP 1030399 A1 (Mitsubishi Chemical Corp.), 23 August, 2000 (23.08.00), Par. Nos. [0016] to [0023], [0027], [0038], [0044] & JP 11-162511 A & WO 9916144 A1 & CN 1278953 A | 1 |
| X | JP 11-121032 A (Mitsubishi Chemical Corp.), 30 April, 1999 (30.04.99), Claim 1; Par. Nos. [0011], [0014]; examples (Family: none) | 1 |
| X | JP 2000-91162 A (Mitsui Chemicals, Ltd.), 31 March, 2000 (31.03.00), Claims 1 to 13; Par. No. [0008] (Family: none) | 1 |
| X | JP 11-283667 A (Sanyo Electric Co., Ltd.), 15 October, 1999 (15.10.99), Claims 1 to 3; Par. Nos. [0012], [0013]; examples (Family: none) | 1 |
| X | JP 2000-58125 A (Japan Storage Battery Co., Ltd.), 25 February, 2000 (25.02.00), Claims 1 to 5; Par. Nos. [0014], [0019], [0020]; examples (Family: none) | 1 |
| X | JP 2000-313800 A (Mitsubishi Chemical Corp.), 14 November, 2000 (14.11.00), Claims 1 to 6; Par. Nos. [0011], [0021], [0025] (Family: none) | 1 |
| X | JP 11-171912 A (Showa Denko Kabushiki Kaisha), 29 June, 1999 (29.06.99), Claims 1 to 29; Par. No. [0035] (Family: none) | 1 |
| X | JP 2000-58122 A (Mitsui Chemicals, Ltd.), 25 February, 2000 (25.02.00), Claims 1 to 11; Par. Nos. [0028], [0031]; examples (Family: none) | 1 |
| X | JP 2001-6729 A (Mitsubishi Chemical Corp.), 12 November, 2001 (12.01.01), Claims 1 to 5; Par. Nos. [0007], [0015] & WO 2000-79632 A1 | 1 |

Form PCT/ISA/210 (continuation of second sheet) (July 1998)

**INTERNATIONAL SEARCH REPORT**

| International application No. |
|---|
| PCT/JP02/03937 |

C (Continuation). DOCUMENTS CONSIDERED TO BE RELEVANT

| Category* | Citation of document, with indication, where appropriate, of the relevant passages | Relevant to claim No. |
|---|---|---|
| X | JP 2000-188128 A (Mitsubishi Chemical Corp.), 04 July, 2000 (04.07.00), Claims 1 to 8; Par. Nos. [0005], [0006]; examples (Family: none) | 1 |

Form PCT/ISA/210 (continuation of second sheet) (July 1998)

**INTERNATIONAL SEARCH REPORT**

International application No.
PCT/JP02/03937

**Box I Observations where certain claims were found unsearchable (Continuation of item 1 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box II Observations where unity of invention is lacking (Continuation of item 2 of first sheet)**

This International Searching Authority found multiple inventions in this international application, as follows:

(See extra sheets)

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.: 1

**Remark on Protest** ☐ The additional search fees were accompanied by the applicant's protest.
☐ No protest accompanied the payment of additional search fees.

Form PCT/ISA/210 (continuation of first sheet (1)) (July 1998)

**INTERNATIONAL SEARCH REPORT**

International application No.
PCT/JP02/03937

Continuation of Box No.II of continuation of first sheet(1)

Observations where unity of invention is lacking (Continuation of item 2 of first sheet)

The International Searching Authority found multiple inventions in this international application, as follows:

A group of inventions of claims must involve a special technical feature so linking the group of inventions as to form a single general inventive concept so that the group of inventions satisfies the requirement of unity of invention. The group of inventions of claims 1-13 are linked only in regard to the technical feature "a nonaqueous electrolytic solution characterized by containing a compound reductively decomposed at a potential higher by 1.0 V or greater than the equilibrium potential of metallic lithium and lithium ion".

However, concerning the technical feature, an electrolyte "containing a soluble compound...reductively decomposed at the anode at a voltage 1 V higher than lithium" is disclosed in the prior art documents, for example, JP 8-45545 A (SAFT) 1996.02.16. The technique of adding one of the compounds enumerated in this international application as the one satisfying the condition to an electrolyte is disclosed, even though not directly described in such an expression, in a large number of prior art documents cited in the examination described below of the invention of claim 2. Therefore, the technical feature cannot be a "special technical feature".

Consequently, the inventions of claims 1-13 do not involve any special technical feature so linking them as to form a single general inventive concept. Therefore the inventions of claim 1-13 do not satisfy the requirement of unity of invention.

Next, the number of inventions of the claims of the international application so linked as to form a single general inventive concept will be examined.

The inventions of independent claim 1 and the dependent claims referring to claim 1 will be examined. These inventions are linked in regard to the technical feature "a nonaqueous electrolytic solution characterized by containing a compound reductively decomposed at a potential higher than the equilibrium potential of metal lithium and lithium ion by 1.0 V or more". However, the technical feature cannot be considered to be a special technical feature so linking them as to form a single general inventive concept since it is disclosed, for example, in the above-mentioned prior art documents.

In claim 2 directly referring to claim 1, a predetermined amount of one of compounds A1 to A13 is added to an electrolyte. As enumerated below, some of compounds A1 to A13 are known as disclosed in the cited documents enumerated below. Therefore the technical feature cannot be a "special technical feature". Concerning the compounds referred to in claim 2, the inventions are not linked by a "special technical feature". Therefore claim 2 defines 13 inventions.

JP 2000-294272 A (Mitsui chemicals, Inc.) 2000.10.20...A1, A7
JP 2000-149989 A (NEC Mobile Energy Kabushiki Kaisha) 2000.05.30...A3
JP 2001-43895 A (Ube Industries, Ltd.) 2001.02.16...A6, A7
JP 11-162511 A (Mitsubishi Chemical Corp.) 1999.06.18...A6, A13
JP 11-121032 A (Mitsubishi Chemical Corp.) 1999.04.30...A7, A13
JP 2000-91162 A (Mitsui chemicals, Inc.) 2000.03.31...A7, A10

Form PCT/ISA/210 (extra sheet) (July 1998)

**INTERNATIONAL SEARCH REPORT**

International application No.
PCT/JP02/03937

Continuation of Box No.II of continuation of first sheet(1)

JP 11-283667 A (Sanyo Electric Co., Ltd.) 1999.10.15...A7
JP 8-45545 A (SAFT) 1996.02.16...A7
JP 2000-58125 A (Japan Storage Battery Co., Ltd.) 2000.02.25...A7
JP 2000-313800 A (Mitsubishi Chemical Corp.) 2000.11.14...A7
JP 11-171912 A (Showa Denko Kabushiki Kaisha) 1999.06.29...A7
JP 2000-58122 A (Mitsui chemicals, Inc.) 2000.02.25...A10
JP 2001-6729 A (Mitsubishi Chemical Corp.) 2001.01.12...A10
JP 2000-188128 (Mitsubishi Chemical Corp.) 2000.07.04...A12
As a result, claims 1, 2 define 14 inventions.

As examining the following inventions of the claims, at least, the inventions of claims 1-7 relate to an electrolyte, the inventions of claims 8-10 relate to a secondary cell, and the inventions of claims 11-13 relate to an electric double-layer capacitor, and the above claims refer to at least claims 1, 2. In consideration of the above fact, the number of inventions relating to an electrolyte is at least 14, the number of inventions relating to a cell is at least 14, and the number of inventions relating to an electric double-layer capacitor is at least 14, in total at least the number of inventions is 42 (in the above prior art documents, both relevant cells and capacitors are disclosed).

Form PCT/ISA/210 (extra sheet) (July 1998)